(19) **Europäisches Patentamt / European Patent Office / Office européen des brevets**

(11) **EP 1 962 244 B1**

(12) **FASCICULE DE BREVET EUROPEEN**

(45) Date de publication et mention
de la délivrance du brevet:
**09.09.2009 Bulletin 2009/37**

(51) Int Cl.:
*G06T 1/00* *(2006.01)* *H04N 1/32* *(2006.01)*

(21) Numéro de dépôt: **08290161.2**

(22) Date de dépôt: **20.02.2008**

(54) **Procédé de tatouage numérique d'un contenu photo ou vidéo permettant une traçabilité de ce contenu**

Verfahren zur digitalen Codierung eines Foto- oder Videoinhalts, das eine Rückverfolgung dieses Inhalts ermöglicht

Method of digitally tattooing photo or video content, allowing this content to be traced

<table>
<tr><td>

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **23.02.2007 FR 0701307**

(43) Date de publication de la demande:
**27.08.2008 Bulletin 2008/35**

(73) Titulaire: **Societé Française du Radiotéléphone**
**75008 Paris (FR)**

(72) Inventeur: **du Chéné, Ghislain**
**92410 Ville d'Avray (FR)**

(74) Mandataire: **Debay, Yves**
**Cabinet Debay**
**126 Elysée 2**
**78170 La Celle Saint Cloud (FR)**

</td><td>

(56) Documents cités:
**EP-A- 1 220 152** **KR-A- 20050 000 238**
**US-A1- 2005 018 843**

- **FRANK HARTUNG ET AL: "Digital Rights Management and Watermarking of Multimedia Content for M-Commerce Applications" IEEE COMMUNICATIONS MAGAZINE, IEEE SERVICE CENTER, PISCATAWAY, US, vol. 38, no. 11, novembre 2000 (2000-11), pages 78-84, XP011091380 ISSN: 0163-6804**
- **SÉNAT N. 89: "Project de Loi relatif à la prévention de la délinquance"[Online] 22 février 2007 (2007-02-22), pages 1-33, XP002455731 Extrait de l'Internet: URL:http://ameli.senat.fr/publication_ pl/2 006-2007/252.html> [extrait le 2007-10-18]**

</td></tr>
</table>

## Description

DOMAINE TECHNIQUE DE L'INVENTION

La présente invention concerne les télécommunications, et plus particulièrement, dans le but de contrôler la traçabilité de certains flux vidéo ou de certaines images sur un réseau, un procédé de tatouage numérique d'un contenu photo ou vidéo permettant une traçabilité de ce contenu. L'invention concerne également un terminal de capture d'images numériques doté de moyens de tatouage numérique embarqués.

ARRIERE-PLAN TECHNOLOGIQUE DE L'INVENTION

Les téléphones portables équipés de caméras sont notamment employés de plus en plus fréquemment pour obtenir des séquences vidéo qui peuvent rapidement circuler sur Internet à l'insu des personnes filmées. Il est actuellement craint qu'une pratique récente, connue sous le nom de « happy slapping » et consistant à filmer des agressions, ne prenne des proportions inquiétantes du fait que la plupart des téléphones mobiles sont aujourd'hui équipés de caméra vidéo. Une législation à ce sujet devrait permettre de condamner juridiquement le fait d'enregistrer ou de diffuser par quelque moyen que ce soit, sur tout support que ce soit, des images relatives à la commission de ces infractions (sauf à des fins professionnelles légitimes ou à des fins d'apport de preuve).

Pour les opérateurs gérant des réseaux de communication, en particulier les réseaux de radiotéléphonie raccordés à Internet, il devient nécessaire de dissuader la diffusion d'enregistrements illicites sur les réseaux et de lutter efficacement contre ces pratiques, afin de ne pas être perçu comme complices de la diffusion d'enregistrements illicites.

Il est connu par ailleurs, par exemple par le document EP 1 513 319 et par le document US 2003/0120927, des procédés de protection d'un contenu numérique pour limiter les usages illégaux (distribution illégale de l'utilisateur et tatouer numériquement cet identifiant au niveau d'un serveur de tatouage qui va ensuite délivrer le contenu numérique à l'utilisateur. Ce procédé permet une protection de contenus délivrés dans un sens descendant (du réseau vers le terminal de communication de l'utilisateur).

Du point de vue de l'opérateur qui gère le réseau de radiotéléphonie, il n'est cependant pas possible de limiter ou empêcher les transferts de fichiers photo ou vidéo issus des terminaux mobiles sous peine de léser l'utilisateur abonné et de diminuer le trafic de données. Le document US 2005/0018843 propose une méthode de marquage numérique de données transmises depuis un terminal à partir des données d'identification du terminal dans un sens montant sans l'utilisation d'un certificat d'autorité. Toutefois, contrairement à ce que ce document mentionne, ce dispositif ne propose aucune solution pour opérer une traçabilité proprement dite des éléments numériques transmis. Il n'existe donc pas dans l'état de la technique de méthodes permettant de dissuader de diffuser des images d'agressions vers le réseau (sens montant). Or, ces pratiques détournées de l'objet premier de transmettre de manière conviviale et plaisante une photo ou une vidéo, peuvent entraîner une mauvaise image pour les opérateurs mobiles qui permettent d'utiliser des appareils parfois subventionnés à des fins non « citoyennes ».

DESCRIPTION GENERALE DE L'INVENTION

La présente invention a donc pour objet de supprimer un ou plusieurs des inconvénients de l'art antérieur en définissant un procédé permettant aux opérateurs ou à une organisation indépendante d'agir pour identifier les auteurs et/ou les diffuseurs d'enregistrements non conformes aux bonnes moeurs (par exemple relatifs à des agressions).

Un objectif supplémentaire de l'invention est de permettre, plus positivement, d'établir la provenance d'images pour déterminer à qui attribuer des droits d'auteur.

A cet effet, l'invention concerne un procédé pour tatouer numériquement un contenu à base d'images numériques générées par un terminal de communication avec un réseau, le terminal disposant dans au moins une mémoire de premières données d'identification du terminal et/ou de secondes données d'identification d'au moins un utilisateur de ce terminal, caractérisé en ce que des moyens de tatouage d'image(s) sont utilisés pour insérer dans le contenu des informations permettant une traçabilité de ce contenu, le procédé comprenant pour cela une étape de récupération desdites premières données terminal, caractérisé en ce que des moyens de tatouage d'image(s) sont utilisés pour insérer dans le contenu des informations permettant une traçabilité de ce contenu, le procédé comprenant pour cela une étape de récupération desdites premières données et/ou des secondes données par des moyens de tatouage et au moins une étape de tatouage du contenu par les moyens de tatouage numérique pour insérer dans ce contenu des premières informations de tatouage incluant les données récupérées, ces étapes étant réalisées :

- lors de la génération ou d'un premier stockage par le terminal dudit contenu par le terminal, les moyens de tatouage étant prévus dans le terminal ; et/ou
- lors d'un transfert dudit contenu vers le réseau par le terminal ou un moyen expéditeur distinct ayant reçu le contenu par une connexion hors réseau, les moyens de tatouage étant prévus dans un serveur du réseau ou dans le moyen expéditeur.

et l'étape de tatouage numérique comprenant un traitement permettant d'obtenir la révélation de toutes les informations de tatouage et incluant au moins les étapes suivantes:

- transformation d'une séquence d'images en une séquence d'images transformées,
  caractérisé par
- l'ordonnancement, pour les coefficients de chaque image transformée, ou d'une zone de chaque image transformée, selon un ordre prédéterminé,
- sélection pour chaque image de la séquence transformée des R premiers coefficients parmi les coefficients ordonnés,
- assemblage des coefficients sélectionnés de chaque image en un vecteur de travail par concaténation des coefficients ordonnés,
- traitement du vecteur de travail,
- insertion du vecteur de travail traité dans la séquence d'images,
- test de la résistance de l'insertion par comparaison à un message de référence prédéterminé et après soumission de la séquence d'images à des attaques et/ou à du bruit,
- répétition du traitement jusqu'à ce qu'une condition d'arrêt liée au test de résistance soit atteint.

Ainsi, le procédé selon l'invention permet d'apporter une traçabilité de contenus photo et vidéo créés à partir de téléphones portables équipés de caméras. Le tatouage numérique est avantageusement réalisé de manière systématique. Le procédé permet par exemple de réaliser un tatouage dans le cas où l'utilisateur a effectué un transfert préalable du contenu de son terminal mobile vers un PC.

Selon une autre particularité, ladite étape de récupération et l'étape de tatouage du contenu sont réalisées lors de la génération ou d'un premier stockage par le terminal dudit contenu, des signaux d'images générés dans le terminal étant interceptés avant leur stockage par des premiers moyens de tatouage numérique prévus dans le terminal.

Ainsi, la première inscription en mémoire (et éventuellement chaque inscription ultérieure) d'une photo ou d'une séquence vidéo est nécessairement réalisée avec un contenu tatoué numériquement, que la mémoire soit interne au terminal ou externe/extractible.

Selon une autre particularité, ladite étape de récupération comprend une récupération desdites premières données par les premiers moyens de tatouage, le terminal de communication disposant dans au moins une mémoire des premières données, la première étape de tatouage étant réalisée pour insérer dans le contenu des premières informations de tatouage incluant les premières données.

Selon une autre particularité, le procédé comprend une deuxième étape de tatouage du contenu lorsque ce dernier est encapsulé dans un message et envoyé par un dispositif expéditeur dans un sens montant via un réseau de communication vers un serveur de messagerie multimédia, la deuxième étape de tatouage utilisant des seconds moyens de tatouage numérique prévus dans le dispositif expéditeur ou dans ledit serveur pour insérer dans le contenu des informations supplémentaires de tatouage incluant des données identifiant le dispositif expéditeur et/ou un module d'identité associé à ce dispositif.

Ainsi, il est permis de tracer un contenu à l'aide d'informations complémentaires : un identifiant associé au terminal ayant servi à la création du contenu et un identifiant associé à l'expéditeur du contenu vers le réseau.

Selon une autre particularité, la deuxième étape de tatouage est réalisée dans le serveur et une étape de détection de données d'images dans le message provenant du terminal est réalisée par le serveur, par lecture d'un champ du message descripteur de contenu, la deuxième étape de tatouage du contenu n'étant réalisée qu'en cas de détection de données d'images dans le message.

Ainsi, dans le cas d'un contenu envoyé par un terminal de radiotéléphonie, le serveur MMSC (Multimedia Messaging Services Center) peut avantageusement insérer dans le tatouage un identifiant, par exemple le numéro mobile MSISDN (Mobile Station Integrated Services Digital Network) du client ou autre identifiant (par exemple IMSI : International Mobile Subscriber Identity) de l'abonné diffusant le message à travers le réseau cellulaire de radiotéléphonie. Dans ce cas, un fichier vidéo ou un fichier d'image(s) envoyé dans le sens montant ne peut pas être acheminé par le réseau de radiotéléphonie sans avoir au préalable été tatoué numériquement.

Selon une autre particularité, les secondes données sont envoyées dans le message par le terminal vers le serveur lorsque le dispositif expéditeur est ledit terminal, cet envoi étant réalisé via un réseau de radiotéléphonie, les secondes données comprenant un identifiant d'un module d'identité amovible inséré dans le terminal.

Ainsi, le serveur MMSC ou serveur similaire dispose avantageusement de données d'identification personnelle à insérer dans le contenu par tatouage numérique (« watermarking »).

Selon une autre particularité, lorsque le terminal est un terminal de radiotéléphonie, un numéro unique IMEI (International Mobile Equipment Identity) du terminal est inséré dans le contenu lors de la première étape de tatouage, au moment de la création du contenu, et un numéro unique MSISDN est ensuite inséré dans le contenu lors de la deuxième étape de tatouage, au moment d'une diffusion du contenu vers un réseau public de type Internet, de manière à pouvoir identifier ultérieurement, via le contenu, le propriétaire du terminal et le propriétaire du module d'identité amovible de type carte SIM ayant servi à la diffusion du contenu vers le réseau public.

Selon une autre particularité, la première étape de tatouage du contenu est réalisée en temps réel par les premiers moyens de tatouage lorsque des signaux de capture vidéo sont transmis par un capteur du terminal vers une unité de traitement vidéo du terminal (cette unité peut consister en un circuit ou une puce servant à compresser les données d'images). Le tatouage peut avantageusement être réalisé au moment de la compression.

Ainsi, le contenu créé peut comporter un tatouage dès l'origine. Même si le contenu parvenait à être diffusé sur un réseau sans passer par un serveur de tatouage (le tatouage supplémentaire étant alors absent), il reste encore l'identifiant du terminal inséré dès l'origine ; il s'agit par exemple du numéro IMEI.

Selon une autre particularité, les informations supplémentaires de tatouage incluent lesdites secondes données.

Selon une autre particularité, une même technique de tatouage est utilisée pour chacune des insertions réalisées par les premiers moyens de tatouage et par les seconds moyens de tatouage, pour permettre une récupération ultérieure simultanée des premières et secondes données par un dispositif contrôleur de traçabilité des images du contenu.

Selon une autre particularité, la deuxième étape de tatouage est réalisée dans le dispositif expéditeur dès qu'une commande de transmission du contenu vers un réseau de type Internet est reçue par des moyens de communication du dispositif expéditeur.

Ainsi, si le dispositif expéditeur correspond à un ordinateur n'ayant pas servi à la création du contenu mais ayant reçu ce contenu via une carte mémoire d'un terminal mobile ou un transfert par une liaison à courte distance (filaire ou non filaire), il reste possible d'identifier l'ordinateur grâce au tatouage réalisé au niveau de cet ordinateur.

Selon une autre particularité, des données de datation sont insérées dans les premières informations de tatouage et/ou dans les informations supplémentaires de tatouage.

Selon une autre particularité, le procédé comprend une étape de traitement, par un équipement de reconnaissance de traçabilité compatible avec les premiers et deuxièmes moyens de tatouage numérique, d'un contenu diffusé sur un réseau pour retrouver l'auteur et le premier diffuseur de ce contenu, dans laquelle au moins une clé de décodage est utilisée pour récupérer toutes les informations de tatouage cachées dans le contenu.

Selon une autre particularité, les premiers moyens de tatouage numérique sont installés dans un terminal mobile par une application SIM Toolkit stockée dans un module d'identité amovible, lors d'une première insertion du module d'identité amovible dans le terminal mobile.

Un objectif supplémentaire de l'invention est de rendre l'information insérée inaltérable, que ce soit par la mise en oeuvre de procédés de transmission/transformation de la séquence vidéo ou que ce soit par la mise en oeuvre de procédés spécifiquement conçus pour altérer ce type d'information. Ici par type d'information il faut comprendre tatouage numérique.

Il faut, à cet endroit, rappeler qu'un tatouage peut être défini par au moins trois caractéristiques. Une première caractéristique est la résistance aux fausses alarmes. Il ne faut, en effet, pas que le traitement de révélation révèle des informations si aucune information n'a été insérée.

Une deuxième caractéristique est la robustesse. Cette caractéristique quantifie la façon dont le tatouage résiste à différentes opérations réalisées sur le film. Ces opérations sont, au moins, le transcodage du film d'un format vers un autre format; la transmission du film via un canal de transmission bruité et des attaques destinées à supprimer le tatouage. La robustesse dépendant de la quantité d'informations tatouées, plus la quantité d'informations est importante et plus la robustesse est réduite.

Une troisième caractéristique est la transparence. Cette caractéristique mesure la façon dont l'insertion du tatouage altère la perception du film visualisé par un utilisateur. Un tatouage parfait est totalement transparent, c'est-à-dire totalement imperceptible à l'utilisateur visualisant le film tatoué.

Une quatrième caractéristique d'un tatouage est la capacité de réaliser une révélation du tatouage en aveugle, c'est-à-dire sans avoir besoin du fichier original non tatoué.

Les procédés de l'état de la technique sont de deux types: l'étalement de spectre et le marquage par information de bord. De tels procédés peuvent être utilisés dans le procédé selon l'invention.

Dans les procédés par étalement de spectre le tatouage est réparti sur plusieurs images dans le film. Cela permet de bien résister à une transmission bruitée car le bruit n'affecte pas toutes les images de la même manière. Ces procédés, à titre d'exemple, sont robustes pour une marque de 256 bits dans une séquence vidéo de 40 secondes à un débit de 64 kbits/seconde.

Cet exemple de film, 40 secondes à un débit de 64 kbits/seconde sera utilisé par la suite, car il correspond à des «clips» couramment diffusés sur des téléphones mobiles.

Les procédés de marquage par information de bord se basent sur la connaissance du codage utilisé pour placer la marque de façon intelligente. Ces procédés ne sont pas du tout robustes, mais permettent d'insérer une grande quantité d'informations.

D'une manière générale, ces procédés ne sont que très peu résistants aux attaques dont la finalité est la suppression du tatouage. La plus connue de ces attaques est l'attaque « StirMark » dont le principe est d'introduire un léger flou dans toutes les images du film. Cela a pour effet de détruire tous les tatouages de l'état de la technique.

Le procédé selon l'invention peut avantageusement utiliser une méthode de tatouage pour laquelle ce problème est résolu, tout en ayant une robustesse et une transparence optimale, en combinant les deux approches de l'état de la technique.

Ainsi dans un mode de réalisation du procédé selon l'invention, le programme de tatouage peut sélectionner des coefficients significatifs dans une séquence d'images transformées et insérer la marque dans cette séquence. La séquence d'images est ensuite soumise à des tests de robustesse dans une itération qui fait évoluer le codage de la marque en fonction du résultat des tests. Au bout d'un certain nombre d'itérations le tatouage est considéré comme satisfaisant et la séquence d'images (par exemple film) est donc considérée comme tatouée. De manière à améliorer encore le procédé, la marque (qui peut correspondre à l'identité du terminal ou de son utilisateur et connue également du serveur) est produite à partir d'une clé secrète, ce qui permet de garder la marque secrète tout en autorisant une révélation en aveugle.

A cet effet, la première étape et/ou la deuxième étape de tatouage numérique comprend au moins les étapes suivantes :

- transformation d'une séquence d'images en une séquence d'images transformées,
- ordonnancement, pour les coefficients de chaque image transformée, ou d'une zone de chaque image transformée, selon un ordre prédéterminé,
- sélection pour chaque image de la séquence transformée des R premiers coefficients parmi les coefficients ordonnés,
- assemblage des coefficients sélectionnés de chaque image en un vecteur de travail par concaténation des coefficients ordonnés,
- traitement du vecteur de travail,
- insertion du vecteur de travail traité dans la séquence d'images,
- test de la résistance de l'insertion par comparaison à un message de référence prédéterminé et après soumission de la séquence d'images à des attaques et/ou à du bruit,
- répétition du traitement jusqu'à ce qu'une condition d'arrêt liée au test de résistance soit atteinte.

Selon une autre particularité, les étapes suivantes sont prévues lors d'un tatouage numérique :

- extraction d'un vecteur C0 par la mise en oeuvre des étapes suivantes :

- transformation d'une séquence de L images en une séquence de L transformées,
- détermination d'une zone d'intérêt dans les L transformées,
- pour chaque zone d'intérêt de chaque transformée, ordonnancement des coefficients de la zone,
- pour chaque zone d'intérêt de chaque transformée, extraction des R premiers coefficients de l'ordonnancement,
- assemblage des L*R coefficients en un vecteur C0,
- choix d'un message Mess de dimension Lm,
- chiffrement du message Mess avec une clé K de manière à obtenir un vecteur G de longueur L*R,
- initialisation d'un vecteur Cw par le vecteur CO,
- application d'un traitement de déchiffrage au vecteur Cw, puis application au résultat obtenu d'un traitement de chiffrage, pour obtenir un vecteur B de longueur L*R, ces opérations étant de type codage de canal,
- tant que i est inférieur à Ni et j inférieur à Nj

  o si G est identique à B, alors incrémentation de i d'une unité,
  o si G est différent de B, alors :

    ■ calcul d'un coefficient de robustesse D,
    ■ initialisation de i à 0,
    ■ incrémentation de j d'une unité,
    ■ si D est inférieur à un seuil Dt alors

      • modification de Cw,
      • insertion de Cw modifié dans la séquence d'images à tatouer, par un procédé inverse de celui utilisé pour l'extraction du vecteur CO,
      • initialisation de j à 0,

    ■ réalisation d'un test de résistance en brouillant la séquence vidéo par une transmission bruitée et par une attaque contre le tatouage,
    ■ extraction d'un vecteur Cwa à partir de la séquence d'images brouillée, par le même procédé utilisé pour l'extraction du vecteur C0,
    ■ production du vecteur B à partir du vecteur Cwa.

De manière non limitative, le message Mess peut inclure par exemple des informations représentatives du numéro IMEI et/ou MSISDN.

R peut être compris dans l'intervalle [300, 420] et L peut être compris dans l'intervalle [800, 1200] pour une séquence vidéo comportant 25 images par secondes à un débit de 64 kb/s. Ni et Nj sont par exemple chacun dans l'intervalle [175, 225].

Selon une autre particularité, le traitement de chiffrage est réalisé par une procédure de type codage de canal, avec un codeur en treillis, la clé K étant la matrice de ce codeur.

Selon une autre particularité, le traitement de déchiffrage est réalisé par une procédure de type décodage de canal, avec un décodeur de Viterbi utilisant la clé K comme matrice de codage.

Selon une autre particularité, une étape de transmission du message vers le destinataire est assurée par le serveur après avoir vérifié la présence d'un tatouage numérique dans le contenu encapsulé dans le message, et/ou après avoir réalisé un tatouage dudit contenu.

Selon une autre particularité, le procédé comprend une étape de tatouage du contenu lorsque ce dernier est encapsulé dans un message et envoyé par le terminal via une interface sans fil à courte distance (infrarouge, Bluetooth®...) vers un terminal local, dans laquelle des seconds moyens de tatouage numérique prévus dans le terminal insèrent dans le contenu des informations supplémentaires de tatouage incluant des données identifiant le terminal et/ou un module d'identité associé au terminal.

Un autre objet de l'invention est de proposer un terminal de capture d'images numériques permettant d'implémenter un procédé de tatouage conforme à l'invention.

A cet effet, l'invention concerne un terminal de capture d'images numériques permettant de générer un contenu photo ou vidéo avec des données de traçabilité, comprenant des moyens de traitement, un capteur numérique, une unité de traitement vidéo pour recevoir des signaux d'images en provenance du capteur, au moins une mémoire pour stocker des premières données d'identification du terminal et/ou des secondes données d'identification d'au moins un utilisateur de ce terminal, et des moyens de stockage pour stocker un contenu photo ou vidéo, caractérisé en ce que les moyens de traitement comprennent des moyens de tatouage numérique d'image(s) incluant un module de récupération desdites premières données et/ou des secondes données dans ladite mémoire, les moyens de tatouage étant agencés pour insérer dans le contenu, lors de la génération ou d'un transfert ou d'un premier stockage par le terminal dudit contenu, des informations de tatouage incluant les données récupérées par ledit module, les moyens de tatouage numérique étant équipés d'un équipement de reconnaissance de traçabilité destiné à effectuer le traitement du contenu pout obtenir la révélation de toutes les informations de tatouage comporte des moyens de transformation d'une séquence d'images en une séquence d'images transformées, caractérisé par des moyens d'ordonnancement, pour les coefficients de chaque image transformés, ou d'une zone de chaque image transformée, selon un ordre prédéterminé, des moyens de sélection pour chaque image de la séquence transformée des R premiers coefficients parmi les coefficients ordonnés, des moyens d'assemblage des coefficients sélectionnés de chaque image en un vecteur de travail par concaténation des coefficients ordonnés, des moyens de traitement du vecteur de travail, des moyens d'insertion du vecteur de travail traité dans la séquence d'images, des moyens de test de la résistance de l'insertion par comparaison à un message de référence prédéterminé et après soumission de la séquence d'images à des attaques et/ou à du bruit et des moyens de répétition du traitement jusqu'à ce qu'une condition d'arrêt liée au test de résistance soit atteinte.

Selon une autre particularité, les moyens de tatouage sont associés à des moyens de transmission de flux vidéo de l'unité de traitement vidéo et interceptent les flux vidéo avant leur stockage dans une mémoire à la disposition du terminal, les moyens de tatouage étant agencés pour déclencher un stockage du contenu uniquement après insertion des informations de tatouage.

Selon une autre particularité, les moyens de tatouage comprennent un module de récupération agencé pour rechercher et récupérer un identifiant IMEI du terminal, dans une mémoire propre au terminal.

Selon une autre particularité, les moyens de tatouage comprennent un module de récupération agencé pour rechercher et récupérer un identifiant IMSI et/ou MSISDN associé à un module d'identité inséré dans le terminal, dans une mémoire du module d'identité, le terminal comprenant une interface de communication pour acheminer l'identifiant IMSI et/ou MSISDN vers les moyens de tatouage.

Selon une autre particularité, les moyens de tatouage sont agencés pour insérer les informations de tatouage en temps réel lorsque des signaux de capture vidéo sont transmis par le capteur du terminal vers l'unité de traitement vidéo.

Selon une autre particularité, les moyens de tatouage sont reliés à des moyens d'horloge du terminal pour insérer des données de datation.

Selon une autre particularité, les moyens de tatouage sont reliés à des moyens de communication du terminal et sont agencés pour insérer des données complémentaires d'identification distinctes des données récupérées lors de la génération ou du premier stockage par le terminal dudit contenu, dès qu'une commande de transmission du contenu vers un réseau de type Internet est reçue par les moyens de communication du terminal.

Un autre objet de l'invention est de proposer un réseau de radiotéléphonie permettant d'implémenter un procédé de tatouage conforme à l'invention.

A cet effet, l'invention concerne un réseau de radiotéléphonie de type cellulaire, utilisant des serveurs de messagerie MMSC pour recevoir, stocker et transférer des messages codés numériquement incluant un contenu photo ou vidéo, chacun des messages étant reçu dans le sens montant du réseau, les serveurs MMSC étant agencés pour transférer chacun des messages reçus vers au moins une destination définie dans le message (champ de destinataire/adresse) ce réseau comportant :

  - des moyens de recevoir au moins un identifiant (par exemple numéro IMEI, IMSI, MSISDN, adresse unique de terminal, etc.) provenant d'un terminal émetteur du message, lors de l'établissement de la communication avec ce terminal ;
  - un moyen de détection pour détecter dans un message reçu des données d'images par lecture d'un champ du message descripteur de ce que contient le message ;
  - un module d'autorisation déclencheur du transfert d'un message vers la destination associée ; et
  - un moyen de traitement de contenu activable en cas de détection d'un contenu photo ou vidéo dans le message reçu, le moyen de traitement de contenu comprenant :

    o des moyens de tatouage numérique permettant de tatouer une information dans ledit contenu et des moyens de récupération dudit identifiant provenant du terminal émetteur pour insérer cet identifiant dans l'information à tatouer ; les moyens de tatouage numérique étant équipés d'un équipement de reconnaissance de traçabilité destiné à effectuer le traitement pour obtenir la révélation de toutes les informations de tatouage et comportant:

- des moyens de transformation d'une séquence d'images en une séquence d'images transformées, caractérisé par
- des moyens d'ordonnancement, pour les coefficients de chaque image transformée, ou d'une zone de chaque image transformée, ou d'une zone de chaque image transformée, selon un ordre prédéterminé,
- des moyens de sélection pour chaque image de la séquence transformée des R premiers coefficients parmi les coefficients ordonnés,
- des moyens d'assemblage des coefficients sélectionnés de chaque image en un vecteur de travail par concaténation des coefficients ordonnés,
- des moyens de traitement du vecteur de travail,
- des moyens d'insertion du vecteur de travail traité dans la séquence d'images,
- des moyens de test de la résistance de l'insertion par comparaison à un message de référence prédéterminé et après soumission de la séquence d'images à des attaques et/ou à du bruit, et
- des moyens de répétition du traitement jusqu'à ce qu'une condition d'arrêt liée au test de résistance soit atteinte

    et/ou

    o des moyens de vérifier que ledit contenu a déjà été tatoué par le terminal émetteur ou par un serveur MMSC ;

le module d'autorisation déclenchant le transfert d'un message incluant un contenu photo ou vidéo après une exécution et/ou une vérification de tatouage dans le contenu.

L'invention, avec ses caractéristiques et avantages, ressortira plus clairement à la lecture de la description faite en référence aux dessins annexés donnés à titre d'exemples non limitatifs dans lesquels :

- la figure 1 illustre un exemple de transmission par un terminal mobile, via un réseau de radiotéléphonie, d'un contenu subissant des traitements de traçabilité selon un procédé de l'invention ;
- la figure 2 représente un diagramme d'étapes d'un procédé selon l'invention ;
- la figure 3 montre un exemple de succession d'étapes du traitement de tatouage numérique pouvant être utilisé dans le procédé selon l'invention.

DESCRIPTION DES MODES DE REALISATION PREFERES DE L'INVENTION

Le procédé selon l'invention ne se limite pas à une technique de tatouage (« watermarking ») particulière mais vise plus spécifiquement à utiliser les techniques de tatouage numérique de façon astucieuse pour permettre une traçabilité de contenus de type photo et vidéo créés à partir de terminaux équipés de capteurs numériques photo et/ou caméra (notamment les téléphones portables équipés de caméras). Cela permet d'insérer une information invisible, c'est-à-dire sans dégradation notable à l'oeil lors de la visualisation normale de la séquence vidéo ou photo. Ladite information peut cependant être lue par un procédé prédéterminé (traitement de révélation). L'utilisateur lambda n'est donc pas lésé par l'implémentation de ce procédé.

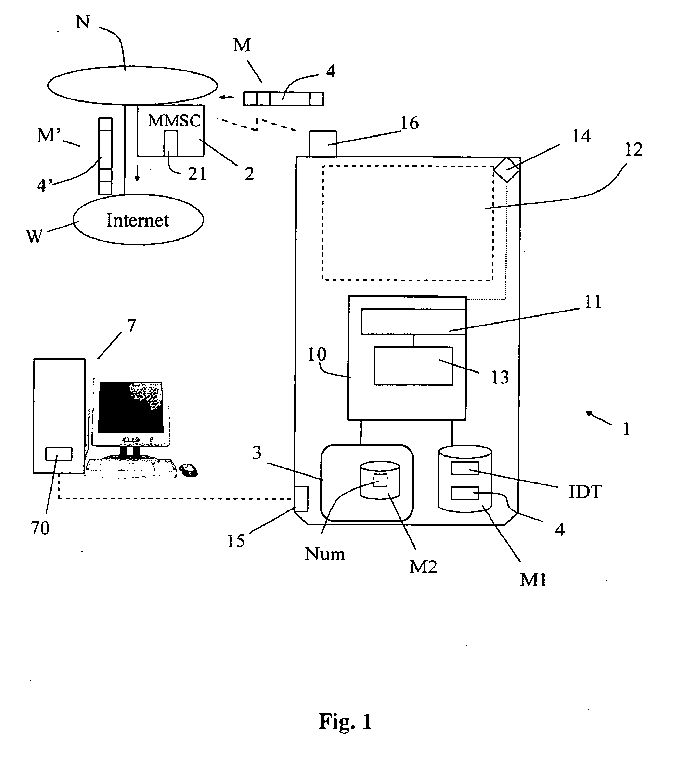

En référence à la figure 1, le terminal (1) de communication est un radiotéléphone cellulaire doté d'un capteur numérique (14) associé à une unité de traitement vidéo (13) ou module de traitement analogue pour capturer des images. Ce type d'unité de traitement vidéo (13) est connu en soi et ne sera pas spécifiquement décrit ici. Un contenu (4) à base d'images numériques peut être généré par ce terminal (1) et stocké dans une mémoire (M1). Le terminal dispose classiquement d'une interface utilisateur avec touches et écran (12) et comprend une antenne radio (16) pour communiquer avec un réseau de radiotéléphonie (N). Une interface (15) d'un type connu en soi permet au terminal (1) d'établir une liaison à courte distance avec un autre terminal comme par exemple un ordinateur PC (7) doté de moyens de communication (70) avec un réseau public (W) tel qu'Internet. Des données représentatives par exemple de photos ou de contenus vidéo capturés au niveau du terminal (1) peuvent ainsi être transmises à l'ordinateur (7) via l'interface (15). L'unité de traitement vidéo (13) est par exemple incorporée dans les moyens de traitement (10) du terminal mobile (1). Les moyens de traitement (10) peuvent faire fonctionner des applications localisées dans un module d'identité (3) de type, par exemple, carte (U)SIM. Dans un mode de réalisation de l'invention, un tatouage du contenu (4) est réalisé en temps réel par des moyens (11) de tatouage lorsque des signaux de capture vidéo sont transmis par le capteur (14) du terminal (1) vers l'unité de traitement vidéo (13). Les moyens (11) de tatouage du terminal (1) sont par exemple prévus dans les moyens de traitement (10).

Dans l'exemple non limitatif de la figure 1, le terminal (1) comprend une première mémoire (M1) pour stocker le contenu (4) ainsi que des premières données (IDT) d'identification du terminal (1). Un module d'identité (3) amovible de type carte SIM ou USIM est inséré dans le terminal (1) et peut stocker dans une seconde mémoire (M2) des secondes données (Num) d'identification d'au moins un utilisateur de ce terminal (1). Les secondes données (Num) peuvent comprendre un identifiant de ce module (3) d'identité tel que l'IMSI ou le numéro MSISDN. Les moyens (11) de tatouage numérique peuvent être installés dans le terminal (1) mobile par une application SIM Toolkit stockée dans un module (3) d'identité amovible, lors d'une première insertion du module (3) d'identité amovible dans le terminal mobile (1).

Le procédé selon l'invention permet de tatouer numériquement les contenus (4) avec des premières données (IDT) d'identification du terminal (1), par exemple le numéro IMEI du terminal (au moment de la création), et avec des données supplémentaires plus particulièrement représentatives des moyens de communication utilisés pour diffuser le contenu (4) et correspondant par exemple au numéro MSISDN (au moment de la diffusion vers Internet, si le contenu est téléchargé via le réseau de l'opérateur). Autrement dit, il est possible d'identifier le propriétaire du terminal (1) et par exemple du module (3) d'identité de type carte SIM en cas d'usage frauduleux. Il est possible de remonter à la source de la fraude simplement en révélant les informations invisibles insérées dans le contenu (4).

Ces informations restent cachées et non accessibles à des tiers tant que le contenu n'est pas rendu public ou qu'aucune plainte n'a été portée. L'opérateur d'un réseau de radiotéléphonie peut alors mettre à disposition la clé (clé secrète de décodage) permettant de récupérer l'information cachée dans le contenu (4). Le procédé vise ainsi à faire disparaître l'usage des caméras des téléphones portables dans les agressions et de renforcer l'image de l'opérateur capable de retrouver les sources de fraude. Ce procédé a vocation à être implémenté par tous les constructeurs de terminaux (IMEI) et opérateurs mobiles (IMSI et/ou MSISDN).

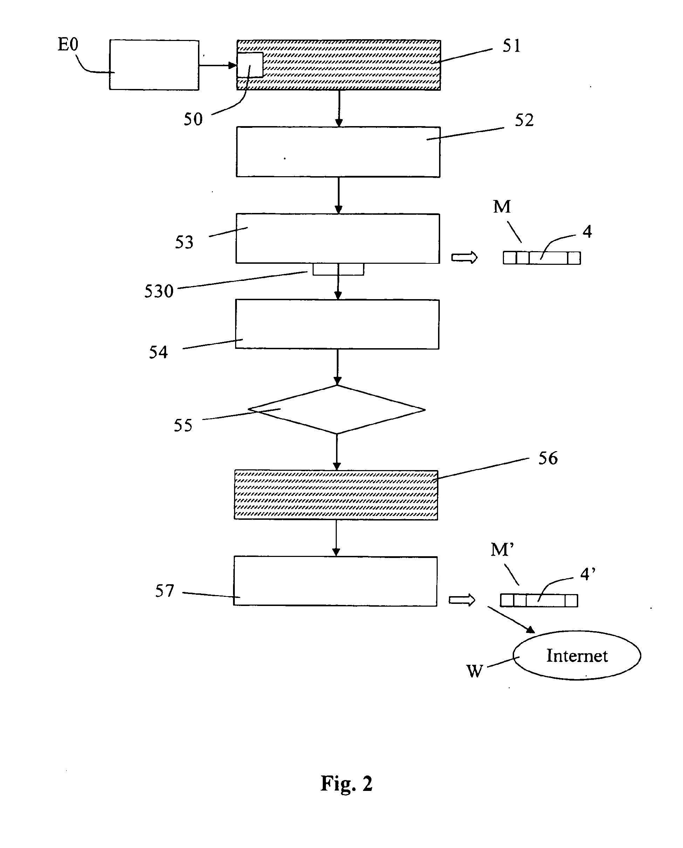

Pour cela, en référence aux figures 1 et 2, après une étape de déclenchement (E0) d'une capture d'images, le procédé comprend, lors de la génération ou d'un premier stockage (52) par le terminal (1) du contenu (4) à base d'images numériques, une étape (50) de récupération desdites premières données (IDT) par les moyens (11) de tatouage numérique et une première étape (51) de tatouage du contenu (4) par ces moyens (11) de tatouage dans le terminal (1). Cette première étape (51) de tatouage sert à insérer dans le contenu (4) des premières informations de tatouage incluant les premières données (IDT). Un tatouage numérique peut, dans une variante ou en complément, être réalisé au moment du transfert du contenu (4) vers le réseau (N, W) par le terminal (1) ou moyen expéditeur local. De la même façon, un tatouage numérique peut être réalisé lors d'un transfert hors réseau vers un terminal local, le transfert utilisant une interface (15) à courte distance (hors réseau).

Dans l'exemple des figures, une fois le contenu (4) stocké, une étape (53) d'encapsulation dans un message (M) de ce contenu (4) peut être réalisée. L'étape (530) d'envoi de ce message vers un destinataire via un réseau (N, W) peut être réalisée par le terminal (1) lui-même ou par l'ordinateur PC (7) ayant reçu le contenu (4) via l'interface (15). La transmission vers l'ordinateur (7) local, via une liaison qui peut être de type filaire ou non-filaire, ne correspond pas à une diffusion publique sur un réseau (N, W). En revanche, l'étape (530) d'envoi du message (M) vers un réseau de radiotéléphonie (N) et/ou vers un réseau public (W) tel qu'Internet pour être diffusé vers au moins un terminal distant constitue une diffusion du contenu (4) qu'il est souhaitable de tracer, afin de déterminer la provenance du contenu (4). Pour cela, le procédé prévoit une deuxième étape (56) de tatouage du contenu (4) lorsque ce dernier est encapsulé dans le message (M) et envoyé par un dispositif expéditeur (1, 7) dans un sens montant via un réseau de communication (N, W) vers un serveur (2) de messagerie multimédia. Cette deuxième étape (56) de tatouage utilise des moyens (21) de tatouage numérique prévus dans le dispositif expéditeur (1, 7) ou dans le serveur (2) pour insérer dans le contenu (4) des informations supplémentaires de tatouage incluant des données identifiant le dispositif expéditeur (1, 7) et/ou un module (3) d'identité associé à ce dispositif (1, 7).

Dans le cas d'une diffusion utilisant les moyens de communication radio du terminal (1), la deuxième étape (56) de tatouage peut utiliser des moyens (21) de tatouage numérique prévus dans le serveur (2) de messagerie multimédia. Ce tatouage numérique supplémentaire permet avantageusement d'insérer le numéro MSISDN ou identifiant similaire (IMSI...) pour pouvoir remonter au client abonné ayant ainsi diffusé le contenu (4). Dans ce mode de réalisation, le serveur (2) ayant reçu (54) le message (M) provenant du terminal (1) peut réaliser une étape (55) de détection de données d'images dans le message (M), par lecture d'un champ du message descripteur de contenu. Comme illustré à la figure 2, la deuxième étape (56) de tatouage du contenu (4) n'est réalisée qu'en cas de détection de données d'images dans le message (M) lors de l'étape (55) de détection. Le message (M') modifié par le serveur (2) comprend un contenu (4') modifié de façon totalement imperceptible à l'oeil, qui va être transmis classiquement au destinataire lors d'une étape de transfert (57). Le serveur (2) est un serveur MMSC ou serveur analogue stockant les informations des messages, traitant certaines informations de routage/adressage et exécutant le transfert de ces messages vers la destination souhaitée. Un traitement supplémentaire est effectué par le serveur (2) pour insérer les informations supplémentaires de tatouage dans le contenu (4).

Les informations supplémentaires à insérer par tatouage numérique sont récupérées par le serveur (2) en extrayant les données fournies dans le message (M) et/ou en récupérant des données d'une base de données du réseau de radiotéléphonie (N). Dans un exemple de réalisation, les secondes données (Num) peuvent être envoyées dans le message (M) par le terminal (1) vers le serveur (2), via le réseau (N) de radiotéléphonie, et être ensuite insérées par les seconds moyens (21) de tatouage du serveur (2).

Préférentiellement mais de manière non limitative, une même technique de tatouage peut être utilisée pour chacune des insertions réalisées par les premiers moyens (11) de tatouage et par les seconds moyens (21) de tatouage. Ceci peut permettre une récupération ultérieure simultanée des premières et secondes données (IDT, Num) lors d'une révélation de tatouage effectuée par un dispositif contrôleur de traçabilité des images du contenu (4).

Dans le cas d'une diffusion vers un réseau (N, W) utilisant les moyens de communication (70) d'un ordinateur (7) ayant récupéré le contenu (4), la deuxième étape (56) de tatouage peut utiliser des moyens de tatouage numérique prévus dans l'ordinateur (7). A titre d'exemple, la deuxième étape (56) de tatouage peut être réalisée dans l'ordinateur (7) dès qu'une commande de transmission du contenu (4) vers un réseau (W) de type Internet est reçue par les moyens (70) de communication de l'ordinateur (7). Un identifiant physique de l'ordinateur et/ou des données d'abonnement à un fournisseur d'accès Internet peuvent être insérées par ce tatouage numérique supplémentaire. Ce type de tatouage supplémentaire peut aussi être mis en oeuvre lorsque le dispositif expéditeur (1, 7) du contenu (4) vers le réseau public (W) est le terminal (1) mobile.

Le procédé selon l'invention peut aussi prévoir l'insertion de données de datation, dans les premières informations de tatouage et/ou dans les informations supplémentaires de tatouage. Ceci permet d'enrichir les informations sur le véritable auteur et/ou le véritable diffuseur. Pour obtenir la révélation de toutes les informations de tatouage, une étape de traitement peut être réalisée par un équipement de reconnaissance de traçabilité compatible avec les premiers et deuxièmes moyens (11, 21) de tatouage numérique. Le traitement du contenu (4) diffusé sur le réseau (N, W) permet alors de retrouver l'auteur et le premier diffuseur de ce contenu (4). Ce traitement utilise au moins une clé de décodage pour récupérer toutes les informations de tatouage cachées dans le contenu (4).

Cet équipement de reconnaissance de traçabilité destiné à effectuer, via un programme de traitement dudit équipement de reconnaissance, le traitement du contenu (4) pour obtenir la révélation de toutes les informations de tatouage comporte des moyens de transformation d'une séquence d'images en une séquence d'images transformées, des moyens d'ordonnancement, pour les coefficients de chaque image transformée, ou d'une zone de chaque image transformée, selon un ordre prédéterminé, des moyens de sélection pour chaque image de la séquence transformée des R premiers coefficients parmi les coefficients ordonnés, des moyens d'assemblage des coefficients sélectionnés de chaque image en un vecteur de travail par concaténation des coefficients ordonnés, des moyens de traitement du vecteur de travail, des moyens d'insertion du vecteur de travail traité dans la séquence d'images, des moyens de test de la résistance de l'insertion par comparaison à un message de référence prédéterminé et après soumission de la séquence d'images à des attaques et/ou à du bruit et des moyens de répétition du traitement jusqu'à ce qu'une condition d'arrêt liée au test de résistance soit atteinte.

Dans un exemple illustrant la mise en oeuvre de l'invention, les dimensions et grandeurs correspondent à un film de 40 secondes, à 25 images par seconde transmis dans un canal de 64 Kbits/s. Cet exemple correspond au domaine de la transmission de film dans le domaine de la téléphonie mobile. Le procédé selon l'invention, bien entendu, reste valable pour d'autres fichiers ou pour des films plus longs, en divisant dans ce cas le film en sous-films de 40 secondes. Cela correspond à un film de L images, L valant approximativement 1000.

Un film de L images peut être transformé en un film de L images transformées. Des transformations sont déjà mises en oeuvre par les procédés de compression. Autrement dit, les films sont créés la plupart du temps dans des formats compressés ici appelés formats transformés. Les transformations les plus couramment utilisées dans la compression de films sont les transformations en cosinus discret (DCT) et les transformations en ondelettes (DWT). Dans la pratique d'autres transformations sont utilisables comme la transformée de Fourier, la transformée de Mellin-Fourier ou la représentation algébrique, par exemple une décomposition en valeurs singulières.

La production d'un vecteur C0 à partir d'une séquence d'images, par exemple un film, peut être l'étape préliminaire pour réaliser le tatouage, une matrice K étant utilisée pour le codage. Une fois la séquence vidéo tatouée, elle peut être stockée puis diffusée. Alternativement le tatouage numérique s'effectue lors du premier stockage. La révélation du tatouage requiert la connaissance du procédé de tatouage et de la matrice K utilisée. Pour révéler le tatouage il suffit de procéder à une extraction du vecteur CO sur la séquence vidéo et d'appliquer par exemple au vecteur CO un décodage de canal de Viterbi en utilisant comme matrice de codage la matrice K. La révélation se fait donc bien en aveugle.

Avec l'exemple de tatouage numérique susmentionné, il est possible de dissimuler au moins 125 octets d'informations dans une séquence vidéo de 40s à 64kbits/s. Ces informations peuvent être utilisées pour identifier un propriétaire de la séquence vidéo, un destinataire de la séquence vidéo.

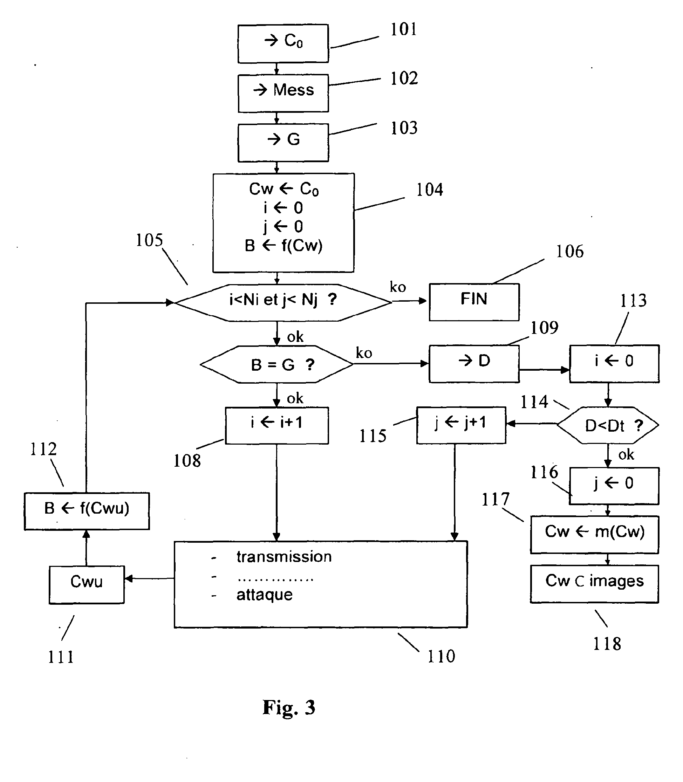

La figure 3 montre une étape (101) préliminaire de production d'un vecteur CO à partir d'un film. L'étape (101) préliminaire peut comporter une étape de transformation, via les moyens de transformation de l'équipement de reconnaissance de traçabilité, d'un film de L images en un film de L images transformées. Des transformations sont déjà mises en oeuvre par les procédés de compression. Dans la pratique, l'information produite à cette étape de transformation est donc déjà disponible puisque les films existent dans des formats compressés ici appelés formats transformés. La présence de cette étape ne nuit donc pas à la performance du procédé selon l'invention.

Comme déjà précisé, les transformations les plus couramment utilisées dans la compression de films sont les transformations en cosinus discret (DCT) et les transformations en ondelettes (DWT). Dans la pratique d'autres transformations sont utilisables comme la transformée de Fourier, la transformée de Mellin-Fourier ou la représentation algébrique, par exemple une décomposition en valeurs singulières. A la fin de l'étape de transformation, le programme de traitement de l'équipement de reconnaissance de traçabilité dispose donc de L images transformées.

Une image est ici une matrice, carrée ou non, de coefficients. Pour la description, ces coefficients sont considérés comme codés sur 8 bits. Dans la pratique les coefficients pourraient être codés sur plus ou moins de bits. Une image transformée est une matrice, carrée ou non, de coefficients. On considère ici que les coefficients de l'image transformée ont la même dynamique, 8 bits, que les coefficients de l'image. Ceci n'est pas nécessairement le cas.

De l'étape de transformation, le programme de traitement de l'équipement de reconnaissance de traçabilité passe à une étape de sélection d'une zone d'intérêt dans les images transformées est réalisée, via les moyens de sélection de l'équipement de reconnaissance de traçabilité. Dans la pratique cette zone peut couvrir toute la surface de l'image, ou une zone aléatoire prédéterminée. Dans une mise en oeuvre plus intéressante, certaines considérations président à la sélection de cette zone. Une zone correspondant à une information importante dont l'altération conduirait à une dégradation significative de la qualité du film à marquer est choisie préférentiellement. Par exemple dans le cas de la transformation DWT, ou la transformation DCT, le programme de traitement de 'équipement de reconnaissance de traçabilité sélectionne deux sous-bandes de basses fréquences.

De l'étape de sélection, le programme de traitement de 'équipement de reconnaissance de traçabilité passe à une étape d'ordonnancement, c'est-à-dire de tri, des coefficients de la zone d'intérêt qui est réalisée via les moyens d'ordonnancement de l'équipement de reconnaissance de traçabilité. Dans la pratique, les moyens d'ordonnancement choisissent un tri croissant ou décroissant. Mais un autre tri de type aléatoire ou un tri séquentiel correspondant à un ordre de lecture des coefficients dans l'image transformée permettrait aussi la mise en oeuvre efficace de l'invention. De l'étape d'ordonnancement, le programme de traitement de l'équipement de reconnaissance de traçabilité passe à une étape d'extraction des coefficients de l'image transformée. Ici le programme de traitement extrait les R premiers coefficients de l'ordonnancement réalisé à l'étape d'ordonnancement. Dans un exemple préféré R vaut 360.

L'équipement de reconnaissance de traçabilité réalise les étapes de sélection, d'ordonnancement et d'extraction pour toutes les images transformées puis, une étape d'assemblage qui est réalisée via les moyens d'assemblage de l'équipement de reconnaissance de traçabilité et qui consiste à concaténer tous les résultats dans l'ordre de leur production, ou un autre prédéterminé, pour obtenir un vecteur C0 de L x R coefficients.

La figure 3 montre que le passage de l'étape (101) préliminaire à une étape (102) de production d'un message Mess. Ce message est tout simplement l'information à tatouer dans la séquence vidéo (cette information représente par exemple l'IMEI et/ou le MSIDN). Dans la pratique, l'équipement de reconnaissance de traçabilité choisit de coder 1 bit de message par image. Dans notre exemple, cela revient à disposer de 1000 / 8 = 125 octets pour tatouer une séquence vidéo de 40 secondes. Donc, il est possible d'insérer, avec de très bonnes qualités, un message de Lm = 125 octets dans une séquence vidéo de 40 secondes. Le contenu de Mess est totalement arbitraire et fonction de l'information qu'une personne mettant en oeuvre le procédé selon l'invention souhaite tatouer dans la séquence vidéo traitée. Si Lm est plus petit alors le tatouage sera de meilleure qualité (on rappelle transparence et robustesse), si Lm est plus grand alors le tatouage sera de moins bonne qualité. De l'étape (102) de production de message, le programme de traitement passe à une étape (103) de production d'un vecteur G. Le vecteur G a une dimension de L * R en octets. Le vecteur G est le résultat d'un chiffrage du message Mess. Ce chiffrage est réalisé par une procédure de type codage de canal avec un codeur de canal en treillis modifié. Il est modifié en ce que l'équipement de reconnaissance de traçabilité utilise comme matrice de ce codeur une matrice K secrète servant de clé de chiffrement. Ici la matrice K de codage en treillis à S colonnes, telle que S x Lm vaut L x R. Cela garantit que le vecteur G sera de dimension L x R. Les coefficients de la matrice K sont choisis de façon aléatoire.

De cette étape (103), le programme de traitement passe à une étape (104) d'initialisation de variables du procédé. Dans la pratique, le programme de traitement initialise un vecteur Cw à la valeur de C0, le programme de traitement initialise deux compteurs i et j à 0 et le programme de traitement initialise un vecteur B à f (Cw). Les vecteurs G, B, et Cw sont de même dimension.

La fonction f est réalisée comme suit avec f fonction de V (f(V)). Un traitement de décodage de canal de type décodage de Viterbi est appliqué à V. La matrice utilisée pour le décodage de Viterbi est la matrice K. Ce décodage produit un vecteur Vi intermédiaire de dimension Lm. Un codage en treillis comme précédemment décrit, c'est-à-dire en utilisant la matrice K comme matrice de codage, est appliqué au vecteur Vi. Le résultat de ce codage est la sortie de la fonction f. De l'étape (104) d'initialisation, le programme de traitement passe à une étape (105) d'évaluation d'une condition de sortie d'une boucle de traitement. Cette condition est que le traitement continue tant que i < Ni et j < Nj. Dans la pratique i et j contrôlent la résistance d'un tatouage aux attaques à la «vie» d'une séquence vidéo. Ces attaques sont, on le rappelle, au moins les manipulations, les transmissions et les tentatives de piratage. Si i est supérieur ou égal à Ni, ou si j est supérieur ou égal à Nj, alors le traitement s'arrête et la dernière séquence vidéo utilisée pour les tests de résistance est la séquence vidéo tatouée. Le programme de traitement passe donc à une étape (106) de fin, c'est-à-dire d'arrêt du traitement. Cette étape (106) est, par exemple, une étape d'archivage ou de transmission effective de la séquence vidéo tatouée.

Dans une réalisation de l'invention Ni et Nj valent 200. Dans la pratique ils sont compris dans l'intervalle [175 - 225]. Plus ils sont élevés, plus la résistance aux attaques sera garantie. Cependant il faut aussi prendre en considération le temps de traitement. A partir de 175, les résultats sont efficacement exploitables. La valeur 200 est un compromis optimal en date de rédaction de ce document relativement aux puissances de calcul disponibles sur les dispositifs susceptibles de mettre en oeuvre le procédé selon l'invention.

Si le test de l'étape (105) d'évaluation est valide, c'est-à-dire si i < Ni et j < Nj, alors le programme de traitement passe à une étape (107) de comparaison des vecteurs B et G. Dans une mise en oeuvre de l'invention cette comparaison consiste à comparer deux à deux les coefficients des vecteurs B et G, les coefficients de même rang devant être égaux pour que les vecteurs soient déclarés égaux, c'est-à-dire si |B - G| = O. Dans cette description la, fonction Il est la norme euclidienne. Dans une variante de l'invention, le programme de traitement introduit une tolérance en considérant que les vecteurs B et G sont égaux si |B - G| est inférieur à un seuil prédéterminé.

Si B = G, alors le programme de traitement passe à une étape (108) d'incrémentation, sinon le programme de traitement passe à une étape (109).

Dans le premier cas, le programme de traitement incrémente le compteur i d'une unité, puis le programme de traitement passe à une étape (110) d'altération de la séquence vidéo modifiée. Il est à noter ici qu'à la première itération, la séquence vidéo n'est pas encore modifiée puisque Cw = C0. Mais, lors d'itérations suivantes la séquence vidéo aura été modifiée. On parle donc de manière générique de séquence vidéo modifiée.

Dans l'étape (110) d'altération, le programme de traitement soumet la séquence vidéo modifiée à un canal de transmission virtuel, c'est-à-dire que le programme de traitement simule une transmission de la séquence vidéo modifiée en la soumettant à un bruit de transmission, par exemple à un bruit blanc et à un bruit correspondant à une attaque.

Dans une mise en oeuvre de l'invention, le bruit de transmission est indexé par i et j. Le programme de traitement effectue ainsi des tests, via les moyens de test de l'équipement de reconnaissance de traçabilité, en utilisant plusieurs versions de bruits ce qui garantit une bonne exploration des modifications que la séquence vidéo peut subir au cours d'une transmission.

Dans une mise en oeuvre de l'invention, l'attaque réalisée (110) est de type StirMark. Il s'agit en effet de l'attaque la plus violente que puisse subir une séquence vidéo à l'heure actuelle. Dans une variante de l'invention, l'étape (110) d'altération comporte d'autres types d'attaques, éventuellement non encore existantes, de manière à garantir la résistance du tatouage à tous les types d'attaques.

Dans une autre variante de l'invention, la séquence vidéo utilisée en entrée de l'étape (110) à l'itération k est celle produite par cette même étape (110) à l'itération k - 1, k représentant ici i ou j selon le chemin d'arrivée à l'étape (110) d'altération. Si i et j valent 0, alors la séquence vidéo en entrée de l'étape (110) est la séquence vidéo modifiée.

De l'étape (110) d'altération, le programme de traitement passe à une étape (111) d'extraction d'un vecteur Cwa de la séquence vidéo produite à l'étape (110) précédente. Cette extraction est réalisée comme pour la production du vecteur C0 à l'étape (101), mais à partir de la séquence vidéo produite à l'étape (110).

De l'étape (111), le programme de traitement passe à une étape (112) de recalcul du vecteur B à partir du vecteur Cwa. Cette production est réalisée par B = f (Cwa), f étant la fonction définie lors de la description de l'étape (104). De l'étape (112) le programme de traitement repasse à l'étape (105) d'évaluation.

Dans l'étape (109), le programme de traitement calcule un coefficient de robustesse D. Pour cela dans une mise en oeuvre de l'invention, le programme de traitement utilise la formule suivante :

$$D = \frac{G - B}{|G - B|} \propto Cw$$

où o est l'opérateur de calcul du coefficient de corrélation non normé.

De l'étape (109), le programme de traitement passe à une étape (113) de remise à 0 du compteur i. L'homme de l'art constatera sans peine que l'ordre relatif des étapes (109) et (113) n'a pas d'importance dans la mise en oeuvre de l'invention. D'une manière générale il en va de même pour les étapes d'initialisation non dépendantes les unes des autres.

De l'étape (113), le programme de traitement passe à une étape (114) de comparaison de D à une référence Dt prédéterminée. Si D est supérieur ou égal à Dt alors le programme de traitement passe à une étape (115). Dans ce cas, cela signifie que la robustesse de la séquence vidéo modifiée est jugée satisfaisante. Dans la pratique Dt vaut 0.4, mais il peut être sélectionné dans l'intervalle [0.2, 1] en conservant au procédé un comportement acceptable du point de vue de la qualité du tatouage produit.

Dans l'étape (115), le programme de traitement incrémente le compteur j d'une unité puis, passe à l'étape (110). Si D est inférieur à Dt alors le programme de traitement passe de l'étape (114) à une étape (116). Dans l'étape 116 le programme de traitement met à 0 le compteur j puis le programme de traitement passe à une étape (117) de modification du vecteur Cw.

Dans une mise en oeuvre de l'invention, dans l'étape (117) le vecteur Cw est modifié par la formule suivante :

$$Cw \leftarrow Cw + \frac{G-B}{|G-B|} \cdot (Dt - D)$$

De cette étape (117), le programme de traitement passe à une étape (118) d'insertion de Cw dans la séquence d'image pour produire une séquence d'image modifiée. L'insertion de Cw dans la séquence d'image se fait par un procédé inverse de celui décrit pour la production du vecteur C0. En particulier, le vecteur Cw est considéré comme le résultat d'une extraction d'une séquence d'images et qu'il est donc composé de L sous-ensembles de R coefficients. Un sous-ensemble donné dans Cw correspond alors à une zone d'intérêt d'une image de la séquence d'images. Chaque coefficient de sous-ensemble correspond alors à un coefficient de l'image. Pour insérer Cw dans la séquence d'images, les coefficients des images de la séquence d'images sont donc remplacés par leurs correspondants dans Cw.

De l'étape (118), le programme de traitement repasse à l'étape (110) d'altération.

Lorsque le programme de traitement arrive à l'étape (106), la séquence vidéo tatouée est la dernière séquence vidéo modifiée produite à l'étape (118).

Le lecteur aura remarqué que le mode de réalisation décrit n'est pas exactement celui revendiqué. En effet le mode de réalisation revendiqué correspond à un enchaînement des étapes comme suit.

De l'étape (113) le programme de traitement passe à l'étape (115), de l'étape (115) le programme de traitement passe à l'étape (114). Si le test de l'étape (114) est négatif, alors le programme de traitement passe à l'étape (110), s'il est positif, le programme de traitement passe à l'étape (116).

Cette différence qui est volontaire ne rendra pas la description confuse mais permettra plutôt d'illustrer une fois encore ce qui a été dit pour les étapes (109) et (113). A savoir que le programme de traitement de l'équipement de reconnaissance de traçabilité peut échanger l'ordre de certaines étapes sans modifier pour autant le procédé selon l'invention. Cela est en particulier vrai pour les étapes d'initialisation.

Une fois la séquence vidéo tatouée, par exemple lors de la première étape (51) de tatouage et lors de la deuxième étape (56) de tatouage, la diffusion de cette dernière peut être tracée.

En référence aux exemples des figures 1 et 2, que ce soit via un message MMS, téléchargé dans le sens montant (« uploaded ») vers un site web ou transmis en fixe à partir du contenu de la carte mémoire récupéré sur un ordinateur PC (7), le numéro IMEI et un numéro relatif à l'abonné (IMSI, MSISDN) peuvent être transmis avec le contenu (4). Dans le cas d'une diffusion depuis un ordinateur PC (7), un identifiant physique tel qu'une adresse M.A.C. (Medium Access Control address), stocké dans une carte réseau ou une interface réseau similaire peut être inséré parmi les informations supplémentaires de tatouage, lors de la deuxième étape (56) de tatouage.

Dans des variantes de réalisation, si le message encapsulant le contenu (4) et émis vers le réseau (N, W) par le terminal (1) ou l'ordinateur (7) n'est pas tatoué, un tatouage numérique peut être tout de même réalisé au niveau d'un serveur du réseau. Des serveurs de messagerie multimédia du réseau Internet et des serveurs de messagerie multimédia du réseau de radiotéléphonie sont par exemple équipés des moyens (21) de tatouage. Le contenu (4) est par conséquent tatoué au niveau du serveur (2) avec l'identifiant du dispositif expéditeur (1, 7) fourni lors de la transmission du message.

Un des avantages du procédé selon l'invention est qu'à la fois l'auteur (via par exemple l'IMEI du terminal (1) mobile) et le diffuseur (via par exemple l'IMSI, le MSISDN, l'adresse MAC...) peuvent être retrouvés. Il est possible de dissuader ainsi efficacement à la fois la diffusion et l'enregistrement des agressions violentes. L'opérateur de radiotéléphonie peut ainsi agir efficacement contre les diffusions illégales d'images et se présenter comme un opérateur « citoyen ». L'opérateur et/ou les fabricants peuvent ainsi mettre en oeuvre des outils facilitant l'application d'une législation répressive vis-à-vis des auteurs et/ou diffuseurs d'agressions.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration et l'invention ne doit pas être limitée aux détails donnés ci-dessus.

**Revendications**

1. Procédé pour tatouer numériquement un contenu (4) à base d'images numériques générées par un terminal (1) de communication avec un réseau (N, W), le terminal (1) disposant dans au moins une mémoire (M1, M2) de premières données (IDT) d'identification du terminal (1) et/ou de secondes données (Num) d'identification d'au moins un utilisateur de ce terminal (1), des moyens de tatouage d'image(s) étant utilisés pour insérer dans le contenu (4) des informations permettant une traçabilité de ce contenu (4), le procédé comprenant pour cela une étape (50) de récupération desdites premières données (IDT) et/ou des secondes données (Num) par des moyens (11, 21) de tatouage et au moins une étape (51, 56) de tatouage du contenu (4) par les moyens (11, 21) de tatouage numérique pour insérer dans ce contenu (4) des premières informations de tatouage incluant les données récupérées, ces étapes (50, 51, 56) étant réalisées :

    - lors de la génération ou d'un premier stockage (52) par le terminal (1) dudit contenu (4) par le terminal (1), les moyens (11) de tatouage étant prévus dans le terminal (1) ; et/ou
    - lors d'un transfert dudit contenu (4) vers le réseau (N, W) par le terminal (1) ou un moyen expéditeur (7) distinct ayant reçu le contenu (4) par une connexion hors réseau, les moyens (21) de tatouage étant prévus dans un serveur (2) du réseau (N, W) ou dans le moyen expéditeur (7) ;
    et l'étape (51, 56) de tatouage numérique comprenant un traitement permettant d'obtenir la révélation de toutes les informations de tatouage et incluant au moins l'étape suivante:
    - transformation d'une séquence d'images en une séquence d'images transformées et étant **caractérisé** au moins par les étapes suivantes:
    - ordonnancement, pour les coefficients de chaque image transformée, ou d'une zone de chaque image transformée, selon un ordre prédéterminé,
    - sélection pour chaque image de la séquence transformée des R premiers coefficients parmi les coefficients ordonnés,
    - assemblage des coefficients sélectionnés de chaque image en un vecteur de travail par concaténation des coefficients ordonnés,
    - traitement (105 - 117) du vecteur de travail,
    - insertion (118) du vecteur de travail traité dans la séquence d'images,
    - test (110) de la résistance de l'insertion par comparaison à un message de référence prédéterminé et après soumission de la séquence d'images à des attaques et/ou à du bruit,
    - répétition (105) du traitement jusqu'à ce qu'une condition d'arrêt liée au test de résistance soit atteinte.

2. Procédé selon la revendication 1, dans laquelle ladite étape (50) de récupération et l'étape (51) de tatouage du contenu (4) sont réalisées lors de la génération ou d'un premier stockage (52) par le terminal (1) dudit contenu (4), des signaux d'images générés dans le terminal (1) étant interceptés avant leur stockage par des premiers moyens (11) de tatouage numérique prévus dans le terminal (1).

3. Procédé selon la revendication 2, dans laquelle ladite étape (50) de récupération comprend une récupération desdites premières données (IDT) par les premiers moyens (11) de tatouage le terminal (1) disposant dans au moins une mémoire (M1, M2) des premières données (IDT), une première étape (51) de tatouage étant réalisée pour insérer dans le contenu (4) des premières informations de tatouage incluant les premières données (IDT).

4. Procédé selon la revendication 3, comprenant une deuxième étape (56) de tatouage du contenu (4) lorsque ce dernier est encapsulé (53) dans un message (M) et envoyé (530) par un dispositif expéditeur (1, 7) dans un sens montant via un réseau de communication (N, W) vers un serveur (2) de messagerie multimédia, la deuxième étape (56) de tatouage utilisant des seconds moyens (21) de tatouage numérique prévus dans le dispositif expéditeur (1, 7) ou dans ledit serveur (2) pour insérer dans le contenu (4) des informations supplémentaires de tatouage incluant des données identifiant le dispositif expéditeur (1, 7) et/ou un module (3) d'identité associé à ce dispositif (1, 7).

5. Procédé selon la revendication 4, dans lequel la deuxième étape (56) de tatouage est réalisée dans le serveur (2) et une étape (55) de détection de données d'images dans le message (M) provenant du terminal (1) est réalisée par le serveur (2), par lecture d'un champ du message descripteur de contenu, la deuxième étape (56) de tatouage du contenu (4) n'étant réalisée qu'en cas de détection de données d'images dans le message (M).

6. Procédé selon la revendication 4 ou 5, dans lequel les secondes données (Num) sont envoyées dans le message (M) par le terminal (1) vers le serveur (2) lorsque le dispositif expéditeur (1, 7) est ledit terminal (1), cet envoi étant réalisé via un réseau (N) de radiotéléphonie, les secondes données (Num) comprenant un identifiant d'un module (3) d'identité amovible inséré dans le terminal (1).

7. Procédé selon une des revendications 4 à 6, dans lequel, lorsque le terminal (1) est un terminal de radiotéléphonie, un numéro unique IMEI du terminal (1) est inséré dans le contenu (4) lors de la première étape (51) de tatouage, au moment de la création du contenu (4), et un numéro unique MSISDN est ensuite inséré dans le contenu (4) lors de la deuxième étape (56) de tatouage, au moment d'une diffusion du contenu (4) vers un réseau public (W) de type Internet, de manière à pouvoir identifier ultérieurement, via le contenu (4), le propriétaire du terminal (1) et le propriétaire du module (3) d'identité amovible de type carte SIM ayant servi à la diffusion du contenu vers le réseau public (W).

**8.** Procédé selon une des revendications 3 à 7, dans lequel la première étape (51) de tatouage du contenu (4) est réalisée en temps réel par les premiers moyens (11) de tatouage lorsque des signaux de capture vidéo sont transmis par un capteur (14) du terminal (1) vers une unité de traitement vidéo (13) du terminal (1).

**9.** Procédé selon une des revendications 1 à 8, dans lequel les informations supplémentaires de tatouage incluent lesdites secondes données (Num).

**10.** Procédé selon une des revendications 4 à 7, dans lequel une même technique de tatouage est utilisée pour chacune des insertions réalisées par les premiers moyens (11) de tatouage et par les seconds moyens (21) de tatouage, pour permettre une récupération ultérieure simultanée des premières et secondes données (IDT, Num) par un dispositif contrôleur de traçabilité des images du contenu (4).

**11.** Procédé selon la revendication 4, dans lequel la deuxième étape (56) de tatouage est réalisée dans le dispositif expéditeur (1, 7) dès qu'une commande de transmission du contenu (4) vers un réseau (W) de type Internet est reçue par des moyens (70) de communication du dispositif expéditeur (1, 7).

**12.** Procédé selon une des revendications 1 à 11, dans lequel des données de datation sont insérées dans les premières informations de tatouage et/ou dans les informations supplémentaires de tatouage.

**13.** Procédé selon une des revendications 4 à 7, comprenant une étape de traitement, par un équipement de reconnaissance de traçabilité compatible avec les premiers et deuxièmes moyens (11, 21) de tatouage numérique, d'un contenu (4) diffusé sur un réseau (N, W) pour retrouver l'auteur et le premier diffuseur de ce contenu (4), dans laquelle au moins une clé de décodage est utilisée pour récupérer toutes les informations de tatouage cachées dans le contenu (4).

**14.** Procédé selon une des revendications 2 à 8, 10, 11 et 13, dans lequel les premiers moyens (11) de tatouage numérique sont installés dans un terminal (1) mobile par une application SIM Toolkit stockée dans un module (3) d'identité amovible, lors d'une première insertion du module (3) d'identité amovible dans le terminal mobile (1).

**15.** Procédé selon la revendication 1, dans lequel ledit traitement de la première étape (51) et/ou la deuxième étape (56) comprend les étapes suivantes :

- extraction (101) d'un vecteur C0 par la mise en oeuvre des étapes suivantes :
- transformation d'une séquence de L images en une séquence de L transformées,
- détermination d'une zone d'intérêt dans les L transformées,
- pour chaque zone d'intérêt de chaque transformée, ordonnancement des coefficients de la zone,
- pour chaque zone d'intérêt de chaque transformée, extraction des R premiers coefficients de l'ordonnancement,
- assemblage des L*R coefficients en un vecteur C0,
- choix (102) d'un message Mess de dimension Lm,
- chiffrement (103) du message Mess avec une clé K de manière à obtenir un vecteur G de longueur L*R,
- initialisation (104) d'un vecteur Cw par le vecteur C0,
- application d'un traitement de déchiffrage au vecteur Cw, puis application au résultat obtenu d'un traitement de chiffrage, pour obtenir un vecteur B de longueur L*R, ces opérations étant de type codage de canal,
- tant que i est inférieur à Ni et j inférieur à Nj (105)

  o si G est identique à B, alors incrémentation (108) de i d'une unité,
  o si G est différent de B (107), alors :

    ■ calcul (109) d'un coefficient de robustesse D,
    ■ initialisation (113) de i à 0,
    ■ incrémentation (115) de j d'une unité,
    ■ si D est inférieur à un seuil Dt (114) alors

      • modification (117) de Cw,
      • insertion (118) de Cw modifié dans la séquence d'images à tatouer, par un procédé inverse de celui utilisé pour l'extraction du vecteur C0,
      • initialisation (116) de j à 0,

    ■ réalisation (110) d'un test de résistance en brouillant la séquence vidéo par une transmission bruitée et par une attaque contre le tatouage,
    ■ extraction (11) d'un vecteur Cwa à partir de la séquence d'images brouillée, par le même procédé utilisé pour l'extraction du vecteur C0,
■ production (112) du vecteur B à partir du vecteur Cwa.

**16.** Procédé selon la revendication 15, dans lequel le traitement de chiffrage est réalisé par une procédure de type codage de canal, avec un codeur en treillis, la clé K étant la matrice de ce codeur.

**17.** Procédé selon une des revendications 15 à 16, dans lequel le traitement de déchiffrage est réalisé par une procédure de type décodage de canal, avec un décodeur de Viterbi utilisant la clé K comme matrice de codage.

**18.** Procédé selon une des revendications 4 à 7, dans lequel une étape de transmission du message (M) vers le destinataire est assurée par le serveur (2) après avoir vérifié la présence d'un tatouage numérique dans le contenu (4) encapsulé dans le message, et/ou après avoir réalisé un tatouage dudit contenu (4).

**19.** Procédé selon une des revendications 2 à 8, comprenant une étape de tatouage du contenu (4) lorsque ce dernier est encapsulé dans un message et envoyé par le terminal (1) via une interface sans fil à courte distance vers un terminal local, dans laquelle des seconds moyens de tatouage numérique prévus dans le terminal (1) insèrent dans le contenu (4) des informations supplémentaires de tatouage incluant des données identifiant le terminal (1) et/ou un module (3) d'identité associé au terminal (1).

**20.** Terminal (1) de capture d'images numériques permettant de générer un contenu (4) photo ou vidéo avec des données de traçabilité, comprenant des moyens de traitement (10), un capteur (14) numérique, une unité de traitement vidéo (13) pour recevoir des signaux d'images en provenance du capteur (14), au moins une mémoire (M1, M2) pour stocker des premières données (IDT) d'identification du terminal (1) et/ou des secondes données (Num) d'identification d'au moins un utilisateur de ce terminal (1), et des moyens de stockage (M1) pour stocker un contenu (4) photo ou vidéO, comprenant les moyens de traitement (10) des moyens (11) de tatouage numérique d'image(s) incluant un module de récupération desdites premières données (IDT) et/ou des secondes données (Num) dans ladite mémoire (M1, M2), les moyens (11) de tatouage étant agencés pour insérer dans le contenu (4), lors de la génération ou d'un transfert ou d'un premier stockage (52) par le terminal (1) dudit contenu (4), des informations de tatouage incluant les données récupérées par ledit module, les moyens (11) de tatouage numérique étant équipés d'un équipement de reconnaissance de traçabilité destiné à effectuer le traitement pour obtenir la révélation de toutes les informations de tatouage, et l'équipement de reconnaissance de traçabilité destiné à effectuer le traitement du contenu (4) pour obtenir la révélation de toutes les informations de tatouage comportant des moyens de transformation d'une séquence d'images en une séquence d'images transformées, et étant de plus **caractérisé par** des moyens d'ordonnancement, pour les coefficients de chaque image transformée, ou d'une zone de chaque image transformée, selon un ordre prédéterminé, des moyens de sélection pour chaque image de la séquence transformée des R premiers coefficients parmi les coefficients ordonnés, des moyens d'assemblage des coefficients sélectionnés de chaque image en un vecteur de travail par concaténation des coefficients ordonnés, des moyens de traitement du vecteur de travail, des moyens d'insertion du vecteur de travail traité dans la séquence d'images, des moyens de test de la résistance de l'insertion par comparaison à un message de référence prédéterminé et après soumission de la séquence d'images à des attaques et/ou à du bruit et des moyens de répétition du traitement jusqu'à ce qu'une condition d'arrêt liée au test de résistance soit atteinte.

**21.** Terminal selon la revendication 20, dans lequel les moyens (11) de tatouage sont associés à des moyens de transmission de flux vidéo de l'unité de traitement vidéo (13) et interceptent les flux vidéo avant leur stockage dans une mémoire (M1, M2) à la disposition du terminal (1), les moyens (11) de tatouage étant agencés pour déclencher un stockage du contenu (4) uniquement après insertion des informations de tatouage.

**22.** Terminal selon la revendication 20 à 21, dans lequel les moyens (11) de tatouage comprennent un module de récupération agencé pour rechercher et récupérer un identifiant IMEI du terminal (1), dans une mémoire (M1) propre au terminal (1).

**23.** Terminal selon une des revendications 20 à 22, dans lequel les moyens (11) de tatouage comprennent un module de récupération agencé pour rechercher et récupérer un identifiant IMSI et/ou MSISDN associé à un module (3) d'identité inséré dans le terminal, dans une mémoire (M2) du module (3) d'identité, le terminal (1) comprenant une interface de communication pour acheminer l'identifiant IMSI et/ou MSISDN vers les moyens (11) de tatouage.

**24.** Terminal selon une des revendications 20 à 23, dans lequel les moyens (11) de tatouage sont agencés pour insérer les informations de tatouage en temps réel lorsque des signaux de capture vidéo sont transmis par le capteur (14) du terminal (1) vers l'unité de traitement vidéo (13).

**25.** Terminal selon une des revendications 20 à 24, dans lequel les moyens (11) de tatouage sont reliés à des moyens d'horloge du terminal (1) pour insérer des données de datation.

**26.** Terminal selon une des revendications 20 à 25, dans lequel les moyens de tatouage sont reliés à des moyens de communication du terminal (1) et sont agencés pour insérer des données complémentaires d'identification distinctes des données récupérées lors de la génération ou du premier stockage (52) par le terminal (1) dudit contenu (4), dès qu'une commande de transmission du contenu (4) vers un réseau (W) de type Internet est reçue par les moyens de communication du terminal (1).

**27.** Réseau de radiotéléphonie de type cellulaire, utilisant des serveurs de messagerie MMSC pour recevoir, stocker et transférer des messages (M) codés numériquement incluant un contenu (4) photo ou vidéo, chacun des messages (M) étant reçu dans le sens montant du réseau (N), les serveurs MMSC étant agencés pour transférer chacun des messages reçus vers au moins une destination définie dans le message (M), ce réseau comportant

- des moyens de recevoir au moins un identifiant provenant d'un terminal (1) émetteur du message (M), lors de l'établissement de la communication avec ce terminal (1) ;
- un moyen de détection pour détecter dans un message reçu des données d'images par lecture d'un champ du message descripteur de ce que contient le message (M) ;
- un module d'autorisation déclencheur du transfert d'un message (M) vers la destination associée ; et
- un moyen de traitement de contenu activable en cas de détection d'un contenu (4) photo ou vidéo dans le message reçu, le moyen de traitement de contenu comprenant :

o des moyens (21) de tatouage numérique permettant de tatouer une information dans ledit contenu (4) et des moyens de récupération dudit identifiant provenant du terminal (1) émetteur pour insérer cet identifiant dans l'information à tatouer, les moyens (21) de tatouage numérique étant équipés d'un équipement de reconnaissance de traçabilité destiné à effectuer le traitement pour obtenir la révélation de toutes les informations de tatouage et comportant :

- des moyens de transformation d'une séquence d'images en une séquence d'images transformées,
- des moyens d'ordonnancement, pour les coefficients de chaque image transformée, ou d'une zone de chaque image transformée, selon un ordre prédéterminé,
- des moyens de sélection pour chaque image de la séquence transformée des R premiers coefficients parmi les coefficients ordonnés,
- des moyens d'assemblage des coefficients sélectionnés de chaque image en un vecteur de travail par concaténation des coefficients ordonnés,
- des moyens de traitement du vecteur de travail,
- des moyens d'insertion du vecteur de travail traité dans la séquence d'images,
- des moyens de test de la résistance de l'insertion par comparaison à un message de référence prédéterminé et après soumission de la séquence d'images à des attaques et/ou à du bruit, et
- des moyens de répétition du traitement jusqu'à ce qu'une condition d'arrêt liée au test de résistance soit atteinte ; et/ou

o des moyens de vérifier que ledit contenu (4) a déjà été tatoué par le terminal (1) émetteur ou par un serveur (2) MMSC;
le module d'autorisation déclenchant le transfert d'un message (M) incluant un contenu (4) photo ou vidéo après une exécution et/ou une vérification de tatouage dans le contenu (4).

**28.** Réseau de radiotéléphonie selon la revendication 27, dans lequel l'équipement de reconnaissance de traçabilité destiné à effectuer le traitement du contenu (4) pour obtenir la révélation de toutes les informations de tatouage comporte des moyens de transformation d'une séquence d'images en une séquence d'images transformées, des moyens d'ordonnancement, pour les coefficients de chaque image transformée, ou d'une zone de chaque image transformée, selon un ordre prédéterminé, des moyens de sélection pour chaque image de la séquence transformée des R premiers coefficients parmi les coefficients ordonnés, des moyens d'assemblage des coefficients sélectionnés de chaque image en un vecteur de travail par concaténation des coefficients ordonnés, des moyens de traitement du vecteur de travail, des moyens d'insertion du vecteur de travail traité dans la séquence d'images, des moyens de test de la résistance de l'insertion par comparaison à un message de référence prédéterminé et après soumission de la séquence d'images à des attaques et/ou à du bruit et des moyens de répétition du traitement jusqu'à ce qu'une condition d'arrêt liée au test de résistance soit atteinte.

## Claims

1. Method of digitally watermarking a content (4) based on digital images generated by a terminal, (1) for communication with a network (N, W), the terminal (1) having at least one memory (M1, M2) first data (IDT) for identification of the terminal (1) and/or second data (Num) for identification of at least one user of this terminal (1), image watermarking means being used in order to insert into the content (4) data enabling traceability of this content (4), the method comprising for this purpose a step (50) of recovery of the said first data (IDT) and/or the second data (Num) by watermarking means (11, 21) and at least one step (51, 56) of watermarking of the content (4) by the digital watermarking means (11, 21) in order to insert into this content (4) first watermarking data including the recovered data, these steps (50, 51, 56) being carried out:

   - during the generation or a first storage (52) by the terminal (1) of the said content (4) by the terminal (1), the watermarking means (11) being provided in the terminal (1); and/or
   - during a transfer of the said content (4) to the network (N, W) by the terminal (1) or a separate sender means (7) having received the content (4) by a connection external to the network, the watermarking means (21) being provided in a server (2) of the network (N, W) or in the sender means (7);
   and the digital watermarking step (51, 56) comprising processing which makes it possible to obtain the revelation of all the watermarking information and including at least the following step:
   - transformation of a sequence of images into a sequence of transformed images,
   and being **characterised** at least by the following steps:
   - sequencing, for the coefficients of each transformed image, or of a zone of each transformed image, according to a predetermined order,
   - selection for each image of the transformed sequence of the R. first coefficients amongst the scheduled coefficients,
   - assembly of the selected coefficients of each image into a working vector by concatenation of the sequence coefficients,
   - processing (105 to 117) of the working vector,
   - insertion (118) of the processed working vector into the sequence of images,
   - testing (110) of the resistance of the insertion by comparison with a predetermined reference message and after submission of the sequence of images to attacks and/or to noise.
   - repetition (105) of the processing until a stopping condition linked to the test of resistance is achieved.

2. Method as claimed in Claim 1, wherein the said step (50) of recovery and the step (51) of watermarking of the content (4) are carried out during the generation or a first storage (52) by the terminal (1) of the said content (4), image signals generated by the terminal (1) being intercepted before their storage by first digital watermarking means (11) provided in the terminal (1).

3. Method as claimed in Claim 2, wherein the said step (50) of recovery comprises a recovery of the said first data (IDT) by the first watermarking means (11), the terminal (1) having in at least one memory (M1, M2) of the first data (IDT), a first watermarking step (51) being carried out in order to insert into the content (4) of the first watermarking data including the first data (IDT).

4. Method as claimed in Claim 3, comprising a second step (56) of watermarking of the content (4) when this latter is embedded (53) in a message (M) and sent (530) by a sender device (1, 7) in an ascending direction via a communication network (N, W) to a multimedia messaging server (2), the second watermarking step (56) using second digital watermarking means (21) provided in the sender device (1, 7) or in the said server (2) in order to insert into the content (4) additional watermarking data including data identifying the sender device (1, 7) and/or an identity module (3) associated with this device (1, 7).

5. Method as claimed in Claim 4, wherein the second watermarking step (56) is carried out in the server (2) and a step (55) of detection of image data in the message (M) originating from the terminal (1) is carried out by the server (2) by reading of a field of the message describing the content, the second step (56) of watermarking of the content (4) being carried out only in the case of detection of image data in the message (M).

6. Method as claimed in either Claim 4 or Claim 5, wherein the second data (Num) are sent in the message (M) by the terminal (1) to the server (2) when the sender device (1, 7) is the said terminal (1), this transmission being carried out via a radiotelephone network (N), the second data (Num) comprising an identifier of a removable identity module (3) inserted into the terminal (1).

7. Method as claimed in any one of Claims 4 to 6, wherein when the terminal (1) is a radiotelephone terminal a unique IMEI number of the terminal (1) is inserted into the content (4) during the first watermarking step (51) at the moment of the creation of the content (4), and a unique MSISDN number is then inserted into the content (4) during the second watermarking step (56) at the moment of broadcasting of the content (4) to a public network (W) of the Internet type in such a way as to be able to subsequently identify via the content (4) the proprietor of the terminal (1) and the proprietor of the removable identity module (3) of the SIM card type which served for broadcasting of the content to the public network (W).

8. Method as claimed in any one of Claims 3 to 7, wherein the first step (51) of watermarking of the content (4) is carried out in real time by the first watermarking means (11) when video capture signals are transmitted by a sensor (14) of the terminal (1) to a video processing unit (13) of the terminal (1).

9. Method as claimed in any one of Claims 1 to 8, wherein the additional watermarking data include the said second data (Num).

10. Method as claimed in any one of Claims 4 to 7, wherein one and the same watermarking technique is used for each of the insertions carried out by the first watermarking means (11) and by the second watermarking means (21) in order to enable subsequent simultaneous recovery of the first and second data (IDT, Num) by a device which controls the traceability of the images of the content (4).

11. Method as claimed in Claim 4, wherein the second watermarking step (56) is carried out in the sender device (1, 7) as soon as a command for transmission of the content (4) to a network (W) of the Internet type is received by communication means (70) of the sender device (1, 7).

12. Method as claimed in any one of Claims 1 to 11, wherein dating data are inserted into the first watermarking data and/or into the additional watermarking data.

13. Method as claimed in any one of Claims 4 to 7, comprising a step of processing, by a traceability recognition device which is compatible with the first and second digital watermarking means (11, 21), of a content (4) broadcast over the network (N, W) in order to find the author and the first broadcaster of this content (4), wherein at least one decoding key is used in order to recover all the watermarking data concealed in the content (4).

14. Method as claimed in any one of Claims 2 to 8, 10, 11 and 13, wherein the first digital watermarking means (11) are installed in a mobile terminal (1) by a SIM Toolkit application stored in a removable identity module (3) during a first insertion of the removable identity module (3) into the mobile terminal (1).

15. Method as claimed in Claim 1, wherein the said processing of the first step (51) and/or the second step (56) comprises the following steps:

- extraction (101) of a vector C0 by the implementation of the following steps:
- transformation of a sequence of L images into a sequence of L transforms,
- determination of an area of interest in the L transforms,
- sequencing of the area for each area of interest of each transform,
- assembly of the L*R coefficients into a vector C0,
- selection (102) of a message Mess of dimension Lm,
- encryption (103) of the message Mess with a key K in such a way as to obtain a vector G of length L*R,
- initialisation (104) of a vector Cw by the vector C0,
- application of decryption processing to the vector Cw, then application to the result obtained from encryption processing in order to obtain a vector of length L*R, these operations being of the channel encoding type,
- as long as i is less than Ni and j is less than Nj (105)

    o if G is identical to B, then incrementation (108) from i by one unit,
    o if G is different from B (107), then:

        • calculation (109) of a coefficient of robustness D,
        • initialisation (113) from i to 0,
        • incrementation (115) from j by one unit,
        • ifD is less than a threshold Dt (114) then

            • modification (117) of Cw,
            • insertion (118) of Cw modified in the sequence of images to be sequenced, by a method contrary to that used for the extraction of the vector C0,
            • initialisation (116) from j to 0,

        • carrying out (110) of a test of resistance by jamming the video sequence by a noisy transmission and by an attack against the watermarking,
• extraction (11) of a vector Cwa on the basis of the jammed sequence of images by the same method used for the extraction of the vector C0,
• production (112) of the vector B on the basis of the vector Cwa.

16. Method as claimed in Claim 15, wherein the encryption processing is carried out by a procedure of the channel encoding type with a trellis encoder, the key K being the matrix of this encoder.

17. Method as claimed in any one of Claims 15 to 16, wherein the decryption processing is carried out by a procedure of the channel decoding type, with a Viterbi decoder using the key K as encoding matrix.

18. Method as claimed in any one of Claims 4 to 7, wherein a step of transmission of the message (M) to the recipient is ensured by the server (2) after having verified the presence of a digital watermark in the content (4) embedded in the message, and/or after having carried out a watermarking of the said content (4).

19. Method as claimed in any one of Claims 2 to 8, comprising a step of watermarking of the content (4) when this latter is embedded in a message and sent by the terminal (1) via a short-range wireless interface to a local terminal, wherein second digital watermarking means provided in the terminal (1) insert into the content (4) additional watermarking data including data identifying the terminal (1) and/or an identity module (3) associated with the terminal (1).

20. Terminal (1) for capture of digital images enabling generation of a photo or video content (4) with traceability data, comprising processing means (10), a digital sensor (14) a video processing unit (13) in order to receive image signals originating from the sensor (14), at least one memory (M1, M2) for storage of first data (IDT) for identification of the terminal (1) and/or second data (Num) of at least one user of this terminal (1), and storage means (M1) for storage of a photo or video content (4), the processing means (10) comprising means (11) for digital watermarking of image(s) including a module for recovery of the said first data (IDT) and/or second data (Num) in the said memory (M1, M2), the watermarking means (11) being provided so as to insert into the content (4), during the generation or a transfer of a first storage (52) by the terminal (1) of the said content (4), of watermarking data including the data recovered by the said module, the digital watermarking means (11) being equipped with a traceability recognition device intended to carry out the processing in order to obtain the revelation of all the watermarking data, and the traceability recognition device intended to carry out the processing of the content (4) in order to obtain the revelation of all the watermarking data including means for transformation of a sequence of images into a sequence of transformed images, and moreover being **characterised by** means for sequencing, for the coefficients of each transformed image or an area of each transformed image, according to a predetermined order, selection means for each image of the transformed sequence of the R first coefficients amongst the ordered coefficients, means for assembling the selected coefficients of each image into a working vector by concatenation of the ordered coefficients, means for processing of the working vector, means for insertion of the processed working vector into the sequence of images, means for testing the resistance of the insertion by comparison with a predetermined reference message and after submission of the sequence of images to attacks and/or to noise and means for repetition of the processing until a stopping condition linked to the test of resistance are achieved.

21. Terminal as claimed in Claim 20, wherein the watermarking means (11) are associated with means for transmission of video streams from the video processing unit (13) and intercept the video streams before they are stored in a memory (M1, M2) available to the terminal (1), the watermarking means (11) being provided in order to trigger storage of the content (4) solely after insertion of the watermarking data.

22. Terminal as claimed in Claims 20 to 21, wherein the watermarking means (11) comprise a recovery module provided in order to seek and recover an identifier IMEI of the terminal (1) in a memory (M1) appertaining to the terminal (1).

23. Terminal as claimed in any one of Claims 20 to 22, wherein the watermarking means (11) comprise a recovery module provided in order to seek and recover an identifier IMSI and/or MSISDN associated with an identity module (3) inserted into the terminal, in a memory (M2) of the identity module (3), the terminal (1) comprising a communication interface in order to route the identifier IMSI and/or MSISDN to the watermarking means (11).

24. Terminal as claimed in any one of Claims 20 to 23, wherein the watermarking means 911) are provided in order to insert the watermarking data in real time when video capture signals are transmitted by the sensor (14) of the terminal (1) to the video processing unit (13).

25. Terminal as claimed in any one of Claims 20 to 24, wherein the watermarking means (11) are connected to clock means of the terminal (1) in order to insert dating data.

26. Terminal as claimed in any one of Claims 20 to 25, wherein the watermarking means are connected to communication means of the terminal (1) and are provided in order to insert additional identification data separate from the data recovered during the generation or the first storage (52) by the terminal (1) of the said content (4) as soon as a command for transmission of the content (4) to a network (W) of the Internet type is received by the communication means of the terminal (1).

27. Radiotelephone network of the cellular type, using messaging servers MMSC in order to receive, store and transfer digitally encoded messages (M) including a photo or video content (4), the servers MMSC being provided in order to transfer each of the received messages to at least one destination defined in the message (M), this network comprising:

- means for receiving at least one identifier originating from a terminal (1) transmitting the message (M) during the establishment of the communication with this terminal (1);
- a detection means for detecting image data in a received message by reading a field of the message describing what is contained in the message (M);
- an authorisation module which triggers the transfer of a message (M) to the associated destination; and
- a content processing means which can be activated in the event of detection of a photo or video content (4) in the received message, the content processing means comprising:

o digital watermarking means (21) making it possible to watermark data in the said content (4) and means for recovery of the said identifier originating from the transmitting terminal (1) in order to insert this identifier into the data to be watermarked, the digital watermarking means (21) being equipped with a traceability recognition device intended to carry out the processing in order to obtain the revelation of all the watermarking data and including:

- means for transformation of a sequence of images into a sequence of transformed images,
- sequencing means for the coefficients of each transformed image or of an area of each transformed image according to a predetermined order,
- selection means for each image of the transformed sequence of the R first coefficients amongst the ordered coefficients,
- means for assembly of the selected coefficients of each image into a working vector by concatenation of the ordered coefficients,
- means for processing the working vector,
- means for insertion of the processed working vector into the sequence of images,
- means for testing the resistance of the insertion by comparison with a predetermined reference message and after submission of the sequence of images to attacks and/or to noise, and
- means for repetition of the processing until a stopping condition linked to the resistance test is achieved; and/or

o means for verifying that the said content (4) has already been watermarked by the transmitting terminal (1) or by a server (2) MMSC;
the authorisation module triggering the transfer of a message (M) including a photo or video content (4) after execution and/or verification of watermarking in the content (4).

28. Radiotelephone network as claimed in Claim 27, wherein the traceability recognition device intended to carry out the processing of the content (4) in order to obtain the revelation of all the watermarking data includes means for transformation of a sequence of images into a sequence of transformed images, means for sequencing, for the coefficients of each transformed image or an area of each transformed image, according to a predetermined order, selection means for each image of the transformed sequence of the R first coefficients amongst the ordered coefficients, means for assembling the selected coefficients of each image into a working vector by concatenation of the ordered coefficients, means for processing of the working vector, means for insertion of the processed working vector into the sequence of images, means for testing the resistance of the insertion by comparison with a predetermined reference message and after submission of the sequence of images to attacks and/or to noise and means for repetition of the processing until a stopping condition linked to the test of resistance are achieved.

## Patentansprüche

1. Verfahren zum Versehen eines Inhaltes (4) basierend auf von einem Endgerät (1) zur Kommunikation mit einem Netzwerk (N, W) erzeugten digitalen Bildern mit einem digitalem Wasserzeichen, wobei das Endgerät (1) in mindestens einem Speicher (M1, M2) erste Daten (IDT) zur Identifizierung des Endgerätes (1) und/oder zweite Daten (Num) zur Identifizierung mindestens eines Benutzers des Endgerätes (1) aufweist, wobei Mittel zum Versehen eines Bildes (von Bildern) mit digitalem Wasserzeichen zum Einfügen von Informationen in den Inhalt (4) verwendet werden, die eine Nachverfolgbarkeit des Inhaltes (4) ermöglichen, wobei das Verfahren hierfür einen Schritt (50) des Wiederherstellens der ersten Daten (IDT) und/oder der zweiten Daten (Num) durch Wisserzeichenmittel (11, 21) und mindestens einen Schritt (51, 56) des Versehens des Inhaltes (4) mit einem Wasserzeichen durch die Mittel (11, 21) zum Versehen mit digitalem Wasserzeichen aufweist, um erste Wasserzeichen-Informationen, die die wiederhergestellten Daten enthalten, in den Inhalt (4) einzufügen, wobei die Schritte (50, 51, 56) realisiert werden:

   - bei dem Erzeugen oder einem ersten Speichern (52) durch das Endgerät (1) des Inhaltes (4) durch das Endgerät (1), wobei die Nasserzeichenmittel (11) in dem Endgerät (1) vorgesehen sind, und/oder
   - bei einem Übermitteln des Inhaltes (4) an das Netzwerk (N, W) durch das Endgerät (1) oder ein anderes Sendemittel (7), das den Inhalt (4) durch eine Verbindung außerhalb des Netzwerks erhalten hat, wobei die Wasserzeichenmittel (21) in einem Server (2) des Netzwerks (N, W) oder in dem Sendemittel (7) vorgesehen sind,
   und wobei der Schritt (51, 56) des Versehens mit einem digitalen Wasserzeichen eine Verarbeitung aufweist, die das Erhalten der Offenbarung aller Wasserzeicheninformationen ermöglicht und mindestens den folgenden Schritt aufweist:
   - Umwandeln einer Sequenz von Bildern in eine Sequenz von umgewandelten Bildern, und mindestens durch die folgenden Schritte **gekennzeichnet** ist:
   - Anordnen für die Koeffizienten jedes umgewandelten Bildes oder eines Bereichs jedes umgewandelten Bildes gemäß einer vorbestimmten Reihenfolge,
   - Auswählen für jedes Bild der umgewandelten Sequenz der R ersten Koeffizienten aus den angeordneten Koeffizienten,
   - Zusammenfügen der ausgewählten Koeffizienten jedes Bildes zu einem Arbeitsvektor durch Verknüpfung der angeordneten Koeffizienten,
   - Verarbeitung (105 bis 117) des Arbeitsvektors,
   - Einfügen (118) des verarbeiteten Arbeitsvektors in die Bildsequenz,
   - Testen (110) der Widerstandsfähigkeit der Einfügung durch Vergleichen mit einer vorbestimmten Referenznachricht, und anschließendes Unterziehen der Bildsequenz Angriffen und/oder einem Rauschen,
   - Wiederholen (105) der Verarbeitung, bis ein mit dem Widerstandsfähigkeitstest verknüpftes Abbruchkriterium erreicht ist.

2. Verfahren gemäß Anspruch 1, wobei der Schritt (50) des Wiederherstellens und der Schritt (51) des Versehens des Inhaltes (4) mit einem Wasserzeichen beim Erzeugen oder bei einem ersten Speichern (52) des Inhaltes (4) durch das Endgerät (1) realisiert werden, wobei Bildsignale, die in dem Endgerät (1) erzeugt werden, vor ihrem Speichern von ersten Mitteln (11) zum Versehen mit digitalem Wasserzeichen, die in dem Endgerät (1) vorgesehen sind, abgefangen werden.

3. Verfahren gemäß Anspruch 2, wobei der Schritt (50) des wiederherstellens ein Wiederherstellen der ersten Daten (IDT) durch die ersten wasserzeichenmibtel (11) aufweist, wobei das Endgerät (1) in mindestens einem Speicher (M1, M2) erste Daten (IDT) aufweist, wobei ein erster Schritt (51) des Versehens mit einem Wasserzeichen realisiert wird, um erste Wasserzeicheninformationen, die die ersten Daten (IDT) enthalten, in den Inhalt (4) einzufügen.

4. Verfahren gemäß Anspruch 3, aufweisend einen zweiten Schritt (56) des Versehens des Inhaltes (4) mit einem Wasserzeichen, wenn letzterer in einer Nachricht (M) verkapselt (53) ist und von einer Sendevorrichtung (1, 7) in ansteigender Richtung über ein Kominunikationsnetzwerk (N, W) an einen Multimedia-Nachrichtenübermittlungs-Server (2) gesendet (530) wird, wobei der zweite Schritt (56) des Versehens mit einem Wasserzeichen zweite Mittel (21) zum Versehen mit einem digitalem Wasserzeichen verwendet, die in der Sendevorrichtung (1, 7) oder in dem Server (2) vorgesehen sind, um zusätzliche Wasserzeichen-Informationen, die Daten enthalten, die die Sendevorrichtung (1, 7) und/oder ein mit der Vorrichtung (1, 7) verknüpftes Identitätsmodul (3) identifizieren, in den Inhalt (4) einzufügen.

5. Verfahren gemäß Anspruch 4, wobei der zweite Schritt (56) des Versehens mit einem Wasserzeichen in dem Server (2) realisiert wird und ein Schritt (55) des Detektierens von Bilddaten in der Nachricht (M), die aus dem Endgerät (1) stammt, von dem Server (2) realisiert wird, mittels Auslesens eines Feldes der Nachricht, das den Inhalt beschreibt, wobei der zweite Schritt (56) des Versehens des Inhalts (4) mit einem Wasserzeichen nur im Fall des Detektierens von Bilddaten in der Nachricht (M) erfolgt.

6. Verfahren gemäß Anspruch 4 oder 5, wobei die zweiten Daten (Num) in der Nachricht (M) von dem Endgerät (1) an den Server (2) gesendet werden, wenn die Sendevorrichtung (1, 7) das Endgerät (1) ist, wobei das Senden über ein Radiotelefonienetzwerk (N) erfolgt, wobei die zweiten Daten (Num) einen Identifizierer eines herausnehmbaren Identitätsmoduls (3) aufweisen, das in das Endgerät (1) eingesetzt ist.

7. Verfahren gemäß einem der Ansprüche 4 bis 6, wobei, wenn das Endgerät (1) ein Radiotelefonie-Endgerät ist, eine einzigartige IMEI-Nummer des Endgerätes (1) beim ersten Schritt (51) des Versehens mit einem Wasserzeichen im Augenblick der Erzeugung des Inhaltes (4) in den Inhalt (4) eingefügt wird, und anschließend während des zweiten Schrittes (56) des Versehens mit einem Wasserzeichen eine einzigartige MSISDN-Nummer im Augenblick eines Rundsendens des Inhaltes (4) an ein öffentliches Netzwerk (W) des Internet-Typs in den Inhalt (4) eingefügt wird, so dass später der Eigentümer des Endgerätes (1) und der Eigentümer des herausnehmbaren Identitätsmoduls (3) des SIM-Kartentyps, der zum Rundsenden des Inhaltes an das öffentliche Netzwerk (W) gedient hat, über den Inhalt (4) identifiziert werden können.

8. Verfahren gemäß einem der Ansprüche 3 bis 7, wobei der erste Schritt (51) des Versehens des Inhaltes (4) mit einem Wasserzeichen von den ersten Wasserzeichenmitteln (11) in Echtzeit realisiert wird, wenn Videoerfassungssignale von einem Fühler (14) des Endgerätes (1) an eine Videoverarbeitungseinheit (13) des Endgerätes (1) übertragen werden.

9. Verfahren gemäß einem der Ansprüche 1 bis 8, wobei die zusätzlichen Wasserzeicheninformationen die zweiten Daten (Num) enthalten.

10. Verfahren gemäß einem der Ansprüche 4 bis 7, wobei eine gleiche Wasserzeichentechnik für jede der Einfügungen verwendet wird, die von den ersten Wasserzeichenmitteln (11) und den zweiten Wasserzeichenmitteln (21) realisiert werden, um eine spätere gleichzeitige Wiederherstellung der ersten und zweiten Daten (IDT, Num) durch eine Vorrichtung zur Steuerung der Nachverfolgbarkeit der Bilder des Inhaltes (4) zu ermöglichen.

11. Verfahren gemäß Anspruch 4, wobei der zweite Schritt (56) des Versehens mit einem Wasserzeichen in der Sendevorrichtung (1, 7) erfolgt, sobald ein Befehl zur Übertragung des Inhaltes (4) an ein Netzwerk (W) des Internet-Typs von Kommunikationsmitteln (70) des Sendemittels (1, 7) empfangen wird.

12. Verfahren gemäß einem der Ansprüche 1 bis 11, wobei Datierungsdaten in die ersten Wasserzeicheninformationen und/oder in die zusätzlichen Nasserzeicheninformationen eingefügt werden.

13. Verfahren gemäß einem der Ansprüche 4 bis 7, aufweisend einen Schritt des Verarbeitens durch eine mit den ersten und zweiten Mitteln (11, 21) zum Versehen mit einem digitalen Wasserzeichen kompatible Einrichtung zur Erkennung der Nachverfolgbarkeit eines Inhaltes (4), der auf einem Netzwerk (N, W) rundgesendet wird, zum Wiederfinden des Urhebers und des ersten Rundsenders des Inhaltes (4), wobei mindestens ein Decodierungsschlüssel zum Wiederherstellen aller in dem Inhalt (4) versteckten Wasserzeicheninformationen verwendet wird.

14. Verfahren gemäß einem der Ansprüche 2 bis 8, 10, 11 und 13, wobei die ersten Mittel (11) zum Versehen mit einem digitalen Wasserzeichen mittels einer in einem herausnehmbaren Identitätsmodul (3) gespeicherten SIM-Toolkit-Anwendung in einem mobilen Endgerät (1) installiert werden bei einem ersten Einsetzen des herausnehmbaren Identitätsmoduls (3) in das mobile Endgerät (1).

15. Verfahren gemäß Anspruch 1, wobei die Verarbeitung des ersten Schrittes (51) und/oder des zweiten Schrittes (56) die folgenden Schritte aufweist:

- Extrahieren (101) eines Vektors C0 durch das Durchführen der folgenden Schritte:
- Umwandeln einer Sequenz von L Bildern in eine Sequenz von L Transformationen,
- Bestimmen eines Bereichs von Interesse in den L Transformationen,
- Anordnen der Koeffizienten des Bereichs für jeden Bereich von Interesse jeder Transformation,
- Extrahieren der R ersten Koeffizienten der Anordnung für jeden Bereich von Interesse jeder Transformation,
- Zusammenführen der L*R Koeffizienten in einen Vektor C0,
- Auswählen (102) einer Nachricht Mess der Abmessung Lm,
- Verschlüsseln (103) der Nachricht Mess mit einem Schlüssel K, so dass ein Vektor G der Länge L*R erhalten wird,
- Initialisieren (104) eines Vektors Cw durch den Vektor C0,
- Anwenden einer Entschlüsselungsverarbeitung auf den Vektor Cw, anschließend Anwenden einer Verschlüsselungsverarbeitung auf das erhaltene Ergebnis, um einen Vektor B der Länge L*R zu erhalten, wobei diese Operationen vom Kanal-Codierungs-Typ sind,
- solange i kleiner als Ni und j kleiner als Nj (105) ist,

    o wenn G gleich B ist, Inkrementieren (108) von i um eine Einheit,
    o wenn G ungleich B (107) ist, dann:

        ■ Berechnen (109) eines Robustheitskoeffizienten D,
        ■ Initialisieren (113) von i bei 0
        ■ Inkrementieren (115) von j um eine Einheit,
        ■ wenn D kleiner als eine Schwelle Dt (114) ist, dann

            • Modifizieren (117) von Cw,
            • Einfügen (118) des modifizierten Cw in die mit Wasserzeichen zu versehende Bildsequenz mittels eines Verfahrens, das umgekehrt ist zu dem, das für das Extrahieren des Vektors C0 verwendet wurde,
            • Initialisieren (116) von j bei 0,

        ■ Durchführen (110) eines Widerstandsfähigkeitstests durch Stören der Videosequenz durch eine Übertragung mit Rauschen und durch einen Angriff gegen das Wasserzeichen,
        ■ Extrahieren (11) eines Vektors Cwa ausgehend von der gestörten Bildsequenz durch dasselbe Verfahren, das für das Extrahieren des Vektors C0 verwendet wurde,
        ■ Erzeugen (112) des Vektors B ausgehend von dem Vektor Cwa.

16. Verfahren gemäß Anspruch 15, wobei die Verschlüsselungsvcrarbeitung mittels einer Vorgehensweise des Kanal-Codierungs-Typs mit einem Trellis-Codierer realisiert wird, wobei der Schlüssel K die Matrix des Codierers ist.

17. Verfahren gemäß einem der Ansprüche 15 bis 16, wobei die Entschlüsselungsverarbeitung mittels einer Vorgehensweise des Kanal-Decodierungs-Typs mit einem Viterbi-Decodierer realisiert wird, der den Schlüssel K alls Codierungsmatrix verwendet.

18. Verfahren gemäß einem der Ansprüche 4 bis 7, wobei ein Schritt der Übertragung der Nachricht (M) an den Empfänger durch den Server (2) sichergestellt wird, nachdem die Anwesenheit eines digitalen Wasserzeichens in dem Inhalt (4), der in der Nachricht verkapselt ist, verifiziert wurde und/oder nachdem ein Versehen des Inhaltes (4) mit einem Wasserzeichen realisiert wurde.

19. Verfahren gemäß einem der Ansprüche 2 bis 8, aufweisend einen Schritt des Versehens des Inhaltes (4) mit einem Wasserzeichen, wenn letzterer in einer Nachricht verkapselt ist und von dem Endgerät (1) über eine drahtlose Schnittstelle mit kurzer Reichweite an ein lokales Endgerät gesendet wird, wobei zweite Mittel zum Versehen mit einem digitalen Wasserzeichen, die in dem Endgerät (1) vorgesehen sind, zusätzliche wasserzeicheninformationen in den Inhalt (4) einfügen, die Daten enthalten, die das Endgerät (1) und/oder ein mit dem Endgerät (1) verknüpftes Identitätsmodul (3) identifizieren.

20. Endgerät (1) zum Erfassen von digitalen Bildern, das das Erzeugen eines Foto- oder Videoinhaltes (4) mit Nachverfolgbarkeitsdaten ermöglicht, aufweisend Verarbeitungsmittel (10), einen digitalen Fühler (14), eine Videoverarbeitungseinheit (13) zum Empfangen von Bildsignalen, die von dem Fühler (14) stammen, mindestens einen Speicher (M1, M2) zum Speichern der ersten Daten (IDT) zur Identifizierung des Endgerätes (1) und/oder der zweiten Daten (Num) zur Identifizierung mindestens eines Benutzers des Endgerätes (1), und Speichermittel (M1) zum Speichern eines Foto- oder Videoinhaltes (4), wobei die Verarbeitungsmittel (10) aufweisen: Mittel (11) zum Versehen eines Bildes (von Bildern) mit einem digitalen Wasserzeichen, aufweisend ein Modul zur Wiederherstellung der ersten Daten (IDT) und/oder der zweiten Daten (Num) in dem Speicher (M1, M2), wobei die Wasserzeichenmittel (11) vorgesehen sind, um Wasserzeicheninformationen, die die Daten enthalten, die von dem Modul wiederhergestellt wurden, während des Erzeugens oder eines Übertragens oder eines ersten Speicherns (52) des Inhaltes (4) durch das Endgerät (1) in den Inhalt (4) einzufügen, wobei die Mittel (11) zum Versehen mit einem digitalen Wasserzeichen mit einer Nachverfolgbarkeits-Erkennungs-Einrichtung ausgestattet sind, die vorgesehen ist, um die Verarbeitung zum Erhalten der Offenbarung aller Wasserzeicheninformationen auszuführen, und wobei die Nachverfolgbarkeits-Erkennungs-Einrichtung, die vorgesehen ist, um die Verarbeitung des Inhaltes (4) zum Erhalten der Offenbarung aller Wasserzeicheninformationen auszuführen, Mittel zum Umwandeln einer Bildsequenz in eine Sequenz umgewandelter Bilder aufweist und ferner **gekennzeichnet ist durch** Mittel zum Anordnen für die Koeffizienten jedes umgewandelten Bildes oder eines Bereichs jedes umgewandelten Bildes gemäß einer vorbestimmten Reihenfolge, Mittel zum Auswählen für jedes Bild der umgewandelten Sequenz der R ersten Koeffizienten aus den angeordneten Koeffizienten, Mittel zum Zusammenfügen der ausgewählten Koeffizienten jedes Bildes zu einem Arbeitsvektor **durch** Verknüpfen der angeordneten Koeffizienten, Mittel zum Verarbeiten des Arbeitsvektors, Mittel zum Einfügen des verarbeiteten Arbeitsvektors in die Bildsequenz, Mittel zum Testen der Widerstandsfähigkeit der Einfügung im Vergleich zu einer vorbestimmten Referenznachricht und anschließend zum Unterziehen der Bildersequenz Angriffen und/oder einem Rauschen, und Mittel zum Wiederholen der Verarbeitung, bis ein mit dem Widerstandsfähigkeitstest verknüpftes Abbruchkriterium erreicht ist.

21. Endgerät gemäß Anspruch 20, wobei die Wasserzeichenmittel (11) mit Mitteln zum Übertragen von Videoströmen der Videoverarbeitungseinheit (13) verknüpft sind und die Videoströme vor ihrem Speichern in einem Speicher (M1, M2) zur Verfügung des Endgerätes (1) einfangen, wobei die Wasserzeichenmittel (11) eingerichtet sind, um ein Speichern des Inhaltes (4) ausschließlich nach dem Einfügen der Wasserzeicheninformationen auszulösen.

22. Endgerät gemäß Anspruch 20 bis 21, wobei die Wasserzeichenmittel (11) ein Wiederherstellungsmodul aufweisen, das vorgesehen ist, um einen IMEI-Identifizierers des Endgerätes (1) in einem Speicher (M1), der zu dem Endgerät (1) gehört, zu suchen und wiederherzustellen.

23. Endgerät gemäß einem der Ansprüche 20 bis 22, wobei die Wasserzeichenmittel (11) ein Wiederherstellungsmodul aufweisen, das vorgesehen ist, um einen IMSI- und/oder MSISDN-Identifizierer, der mit einem Identitätsmodul (3) verknüpft ist, das in das Endgerät eingesetzt ist, in einem Speicher (M2) des Identitätsmoduls (3) zu suchen und wiederherzustellen, wobei das Endgerät (1) eine Kommunikationsschnittstelle aufweist, um den IMSI- und/oder MSISDN-Identifizierer an die Wasserzeichenmittel (11) weiterzuleiten.

24. Endgerät gemäß einem der Ansprüche 20 bis 23, wobei die Wasserzeichenmittel (11) vorgesehen sind, um die Wasserzeicheninformationen in Echtzeit einzufügen, wenn Videoerfassungssignale von dem Fühler (14) des Endgerätes (1) an die Videoverarbeitungseinheit (13) übermittelt werden.

25. Endgerät gemäß einem der Ansprüche 20 bis 24, wobei die Wasserzeichenmittel (11) mit Taktmitteln des Endgerätes (1) verknüpft sind, um Datierungsdaten einzufügen.

26. Endgerät gemäß einem der Ansprüche 20 bis 25, wobei die Wasserzeichenmittel mit Kommunikationsmitteln des Endgerätes (1) verknüpft sind und vorgesehen sind, um komplementäre Identifizierungsdaten, die sich von den wiederhergestellten Daten unterscheiden, bei der Erzeugung oder dem ersten Speichern (52) durch das Endgerät (1) des Inhaltes (4) einzufügen, sobald ein Befehl zur Übertragung des Inhaltes (4) an ein Netzwerk (W) des Internettyps von den Kommunikationsmitteln des Endgerätes (1) erhalten wird.

27. Radiotelefonienetzwerk des zellulären Typs, das Nachrichtenübermittlungs-MMSC-Server verwendet, um digital codierte Nachrichten (M), die einen Foto- oder Video-Inhalt (4) enthalten, zu empfangen, zu speichern und zu übertragen, wobei jede der Nachrichten (M) in aufsteigender Richtung von dem Netzwerk (N) empfangen wird, wobei die MMSC-Server vorgesehen sind, um jede der empfangenen Nachrichten an mindestens ein definiertes Ziel in der Nachricht (M) zu übermitteln, wobei das Netzwerk aufweist:

   - Mittel, um mindestens einen Identifizierer, der von einem Endgerät (1) stammt, das die Nachricht (M) aussendet, beim Aufbau der Kommunikation mit dem Endgerät (1) zu empfangen,
   - ein Detektionsmittel, um in einer empfangenen Nachricht Bilddaten durch Lesen eines Feldes der Nachricht, das beschreibt, was in der Nachricht (M) enthalten ist, zu detektieren,
   - ein Autorisierungsmodul, das die Übertragung einer Nachricht (M) an das verknüpfte Ziel auslöst, und
   - ein Mittel zur Verarbeitung von Inhalt, das im Fall der Detektion eines Foto- oder Video-Inhaltes (4) in der empfangenen Nachricht aktivierbar ist, wobei das Inhaltsverarbeitungsmittel aufweist:

      o Mittel (21) zum Versehen mit einem digitalen Wasserzeichen, die das Versehen einer Information in dem Inhalt (4) mit einem Wasserzeichen ermöglichen, und Mittel zur Wiederherstellung des Identifizierers, der aus dem sendenden Endgerät (1) stammt, um den Identifizierer in die mit Wasserzeichen zu versehende Information einzusetzen, wobei die Mittel (21) zum Versehen mit einem digitalen Wasserzeichen mit einer Nachverfolgbarkeits- Erkannungs- Einrichtung ausgestattet sind, die zum Ausführen der Verarbeitung zum Erhalten der Offenbarung aller Wasserzeicheninformationen vorgesehen ist und aufweist:

      - Mittel zum Umwandeln einer Bildsequenz in eine Sequenz umgewandelter Bilder,
      - Mittel zum Anordnen für die Koeffizienten jedes umgewandelten Bildes oder eines Bereichs jedes umgewandelten Bildes gemäß einer vorbestimmten Reihenfolge,

- Mittel zum Auswählen für jedes Bild der umgewandelten Sequenz der R ersten Koeffizienten aus den angeordneten Koeffizienten,
- Mittel zum Zusammenfügen der ausgewählten Koeffizienten jedes Bildes zu einem Arbeitsvektor durch Verknüpfung der angeordneten Koeffizienten,
- Mittel zur Verarbeitung des Arbeitsvektors,
- Mittel zum Einfügen des verarbeiteten Arbeitsvektors in die Bildsequenz,
- Mittel zum Testen der Widerstandsfähigkeit der Einfügung durch Vergleichen mit einer vorbestimmten Referenznachricht und anschließendes Unterziehen der Bildsequenz Angriffen und/oder einem Rauschen, und
- Mittel zum Wiederholen der Verarbeitung, bis ein mit dem Widerstandsfähigkeitstest verknüpftes Abbruchkriterium erreicht ist, und/oder

  o Mittel zum Verifizieren, dass der Inhalt (4) bereits durch das sendende Endgerät (1) oder einen MMSC-Server (2) mit einem Wasserzeichen versehen wurde,

wobei das Autorisierungsmodul die Übertragung einer Nachricht (M), die einen Foto- oder Video-Inhalt (4) enthält, nach einem Ausführen und/oder einem Verifizieren des Wasserzeichens in dem Inhalt (4) auslöst.

28. Radiotelefonienetzwerk gemäß Anspruch 27, wobei die Nachverfolgbarkeits-Erkennungs-Einrichtung, die vorgesehen ist, um die Verarbeitung des Inhaltes (4) zum Erhalten der Offenbarung aller Wasserzeicheninformationen auszuführen, aufweist: Mittel zum Umwandeln einer Bildsequenz in eine Sequenz umgewandelter Bilder, Mittel zum Anordnen für die Koeffizienten jedes umgewandelten Bildes oder eines Bereichs jedes umgewandelten Bildes gemäß einer vorbestimmten Reihenfolge, Mittel zum Auswählen für jedes Bild der umgewandelten Sequenz der R ersten Koeffizienten aus den angeordneten Koeffizienten, Mittelzum Zusammenfügen der ausgewählten Koeffizienten jedes Bildes zu einem Arbeitsvektor durch Verknüpfung der angeordneten Koeffizienten, Mittel zum Verarbeiten des Arbeitsvektors, Mittel zum Einfügen des verarbeiteten Arbeitsvektors in die Bildsequenz, Mittel zum Testen der Widerstandsfähigkeit der Einfügung durch Vergleichen mit einer vorbestimmten Referenznachricht und anschließendes Unterziehen der Bildsequenz Angriffen und/oder einem Rauschen, und Mittel zum Wiederholen der Verarbeitung, bis ein mit dem Niderstandsfähigkeitstest verknüpftes Abbruchkriterium erreicht ist.

**Fig. 1**

**Fig. 2**

**Fig. 3**

**EP 1 962 244 B1**

RÉFÉRENCES CITÉES DANS LA DESCRIPTION

**Documents brevets cités dans la description**

- EP 1513319 A
- US 20030120927 A
- US 20050018843 A